(19) Europäisches Patentamt
European Patent Office
Office européen des brevets

(11) **EP 4 213 587 A1**

(12) **EUROPÄISCHE PATENTANMELDUNG**

(43) Veröffentlichungstag:
**19.07.2023 Patentblatt 2023/29**

(21) Anmeldenummer: **23160223.6**

(22) Anmeldetag: **22.10.2021**

(51) Internationale Patentklassifikation (IPC):
**H05B 1/02** (2006.01) **H05B 6/06** (2006.01)
**F24C 7/08** (2006.01) **H04W 4/38** (2018.01)

(52) Gemeinsame Patentklassifikation (CPC):
**H05B 1/0266; F24C 7/082; H04W 4/38; H05B 6/062**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2020 DE 102020213804**

(62) Dokumentnummer(n) der früheren Anmeldung(en) nach Art. 76 EPÜ:
**21798674.4 / 4 026 395**

(71) Anmelder: **Bruckbauer, Wilhelm**
**83115 Neubeuern (DE)**

(72) Erfinder:
• **Schmickal, Julian**
**6342 Niederndorf (AT)**

• **Jungmann, Michael**
**6342 Niederndorf (AT)**
• **Kepplinger, Hannes**
**6342 Niederndorf (AT)**
• **Tüchler, Julia**
**6342 Niederndorf (AT)**
• **Schuster, Kay**
**6342 Niederndorf (AT)**

(74) Vertreter: **Rau, Schneck & Hübner**
**Patentanwälte Rechtsanwälte PartGmbB**
**Königstraße 2**
**90402 Nürnberg (DE)**

Bemerkungen:
Diese Anmeldung ist am 06.03.2023 als Teilanmeldung zu der unter INID-Code 62 erwähnten Anmeldung eingereicht worden.

(54) **VERFAHREN, COMPUTERPROGRAMM UND STEUERGERÄT ZUM STEUERN EINES GARGERÄTS UND GARGERÄTESYSTEM**

(57) Ein Verfahren zum Steuern eines Gargeräts (2, 3) anhand eines von einem Mobilgerät (19, 20) über eine drahtlose Datenverbindung (23) an ein Steuergerät (6a, 6b) übertragenen Steuerbefehls, umfassend die Schritte: Erfassen mehrerer der mit einer Signalstärke der drahtlosen Datenverbindung (23) korrelierender Abtastwerte, Bestimmen eines Prüfwerts anhand der mehreren Abtastwerte, Vergleichen des Prüfwerts mit einem Referenz-Prüfwert zum Bestimmen eines Vergleichsergebnisses, Beschränken der Steuerbarkeit des Gargeräts (2, 3) mittels des Mobilgeräts (19, 20) in Abhängigkeit von dem Vergleichsergebnis.

Fig. 1

## Beschreibung

Die vorliegende Patentanmeldung nimmt die Priorität der deutschen Patentanmeldung DE 10 2020 213 804.4 in Anspruch, deren Inhalt durch Bezugnahme hierin aufgenommen wird.

Die Erfindung betrifft ein Verfahren zum Steuern eines Gargeräts. Ferner betrifft die Erfindung ein Computerprogramm für ein Steuergerät zum Steuern eines Gargeräts. Die Erfindung betrifft auch ein derartiges Steuergerät und ein Gargerätesystem mit einem derartigen Steuergerät.

Aus der EP 3 236 709 A1 ist ein Verfahren zum Steuern eines Kochgeräts mittels eines von dem Kochgerät separaten mobilen Endgeräts bekannt. Bedienbefehle von dem mobilen Endgerät werden bei einer geringen Signalstärke einer drahtlosen Kommunikationsverbindung zwischen dem mobilen Endgerät und dem Kochgerät blockiert. Steigt die Signalstärke danach wieder an, bleiben die Bedienbefehle blockiert. Nachteilig ist, dass dieses Verfahren zur Fernsteuerung eines Kochgeräts mittels eines mobilen Endgeräts störanfällig und somit wenig benutzerfreundlich ist.

Eine Aufgabe der Erfindung besteht deshalb darin, ein verbessertes Verfahren zum Steuern eines Gargeräts zu schaffen, welches insbesondere ein besonders robustes, zuverlässiges und sicheres Steuern eines Gargeräts mittels eines Mobilgeräts gewährleistet.

Diese Aufgabe wird durch ein Verfahren zum Steuern eines Gargeräts mit den Merkmalen des Anspruchs 1 gelöst. Es wurde erkannt, dass das Steuein des Gargeräts aufgrund eines von dem Mobilgerät über eine drahtlose Datenverbindung an das Steuergerät übertragenen Steuerbefehls besonders robust, zuverlässig und sicher erfolgen kann, wenn ein Beschränken der Steuerbarkeit des Gargeräts mittels des Mobilgeräts anhand mehrerer Abtastwerte erfolgt, die mit einer Signalstärke der drahtlosen Datenverbindung korrelieren. Insbesondere kann das Beschränken der Steuerbarkeit des Gargeräts mittels des Mobilgeräts in Abhängigkeit von einem Vergleichsergebnis erfolgen, welches durch Vergleichen eines Prüfwerts mit einem Referenz-Prüfwert bestimmt wird. Der Prüfwert wird vorzugsweise anhand der mehreren Abtastwerte bestimmt. Das Übertragen des Steuerbefehls kann das Aussenden des Steuerbefehls, insbesondere mittels des Mobilgeräts, und/oder das Empfangen des Steuerbefehls, insbesondere mittels des Steuergeräts, umfassen. Das Steuern des Gargeräts mittels des Mobilgeräts ist für den Benutzer besonders komfortabel. Vorzugsweise werden das Mobilgerät und/oder das Steuergerät zum Steuern des Gargeräts zunächst, insbesondere an dem Gargerät, bereitgestellt. Anschließend kann die drahtlose Datenverbindung zwischen dem Steuergerät und dem Mobilgerät hergestellt werden. Das Mobilgerät ist vorzugsweise tragbar und kann mit dem Benutzer mitgeführt werden. Das Mobilgerät kann eine Energiequelle, insbesondere eine Batterie oder einen Akkumulator aufweisen. Steuerbefehle müssen somit vom Benutzer nicht direkt am Steuergerät, insbesondere am Gargerät, eingegeben werden, sondern können flexibel über das frei positionierbare Mobilgerät getätigt werden. Dadurch, dass das Beschränken der Steuerbarkeit anhand mehrerer, mit der Signalstärke korrelierender Abtastwerte erfolgt, ist das Verfahren besonders robust gegenüber Störeinflüssen, insbesondere gegenüber Schwankungen der Signalstärke und Messfehlern. Insbesondere kann vermieden werden, dass ein einmalig abweichender, fehlerhafter Abtastwert zum Beschränken der Steuerbarkeit des Gargeräts mittels des Mobilgeräts, insbesondere mit anschließendem Blockieren von Bedienbefehlen des Mobilgeräts, führt.

Die Signalstärke der drahtlosen Datenverbindung hängt insbesondere von einem Abstand zwischen dem Mobilgerät und dem Steuergerät ab. Das Beschränken der Steuerbarkeit erfolgt in Abhängigkeit von der Signalstärke und damit auch von dem Abstand zwischen dem Mobilgerät und dem Steuergerät. Das Verfahren gewährleistet somit, dass das Steuern des Gargeräts mittels des Mobilgeräts bei einem Abstand zwischen diesen Geräten verhindert werden kann, bei dem das Gargerät außerhalb eines von dem Benutzer kontrollierbaren Bereichs liegt. Vorzugsweise wird das Steuern des Gargeräts aus einem Bereich außerhalb des von dem Benutzer einsehbaren Bereichs verhindert. Das Steuern des Gargeräts kann hierdurch besonders sicher erfolgen.

Das Steuergerät ist vorzugsweise ein Bestandteil des Gargeräts. Vorzugsweise ist das Steuergerät zum Steuern mindestens eines Verbrauchers, insbesondere einer Heizeinheit und/oder eines Lüfters, insbesondere eines Dunstabzugslüfters ausgebildet. Die Heizeinheit des Gargeräts ist von dem Steuergerät vorzugsweise in einem Abstand angeordnet, der in einem Bereich von 0 m bis 1 m, insbesondere von 0 m bis 0,5 m, insbesondere von 0,05 m bis 0,25 m, liegt. Das Steuergerät ist vorzugsweise an einer Tragstruktur des Gargeräts und/oder in einem Gehäuse des Gargeräts angeordnet.

Das Steuergerät kann ein Steuer-Kommunikationsmodul zum Ausbilden der drahtlosen Datenverbindung zwischen dem Steuergerät und dem Mobilgerät aufweisen. Die drahtlose Datenverbindung kann auf der Übermittlung von Daten mittels elektromagnetischer Strahlung, insbesondere UV-Strahlung und/oder Funkwellen, insbesondere einer Radiofrequenz und/oder einer Bluetooth-Frequenz und/oder einer WiFi-Frequenz und/oder einer Zigbee-Frequenz, erfolgen. Das Steuer-Kommunikationsmodul kann entsprechend als UV-Modul und/oder als Bluetooth-Modul, insbesondere als BLE-Modul (Bluetooth-Low-Energy), und/oder als WiFi-Modul, ausgebildet sein. Ein Mobil-Kommunikationsmodul des Mobilgeräts zum Ausbilden der drahtlosen Datenverbindung zwischen dem Steuergerät und dem Mobilgerät ist vorzugsweise zur Kommunikation mit dem Steuer-Kommunikationsmodul ausgebildet.

Das Steuergerät kann als separates Modul ausgebildet sein, insbesondere zerstörungsfrei lösbar an dem Gargerät angeordnet sein, und/oder eine eigene Stromversorgung aufweisen und/oder ausschließlich reversibel lösbare Datenschnittstellen, insbesondere zur kabelgebundenen Datenübertragung, aufweisen und/oder ein eigenes Gehäuse, aufweisen. Alternativ kann das Steuergerät in das Gargerät integriert sein, insbesondere zumindest anteilig, insbesondere vollständig, auf einer Platine des Gargeräts angeordnet sein, und/oder eine mit dem Gargerät gemeinsame Stromversorgung aufweisen und/oder eine nicht zerstörungsfrei lösbare, kabelgebundene Datenschnittstelle zu dem Gargerät aufweisen.

Das Steuergerät umfasst vorzugsweise eine Steuer-Benutzerschnittstelle zum Austausch von Informationen mit dem Benutzer. Die Steuer-Benutzerschnittstelle kann eine Eingabeeinheit, insbesondere einen Schalter und/oder einen Taster und/oder einen berührungsempfindlichen Sensor, insbesondere einen berührungsempfindlichen Bildschirm, und/oder ein Mikrofon, und/oder eine Ausgabeeinheit, insbesondere eine Lampe und/oder einen Bildschirm und/oder einen Lautsprecher aufweisen.

Gemäß einem Aspekt der Erfindung weist das Gargerät ein Basis-Steuergerät zum Steuern des mindestens einen Verbrauchers auf. Vorzugsweise ist das Basis-Steuergerät zur ausschließlich kabelgebundenen Signalübertragung, insbesondere ohne ein Funkmodul, ausgebildet. Es kann eine Steuer-Benutzerschnittstelle zum Austausch von Informationen mit dem Benutzer aufweisen. Vorzugsweise ist das Basis-Steuergerät zum Steuern, insbesondere sämtlicher Funktionen, des Gargeräts, insbesondere unabhängig von Steuerbefehlen des Steuergeräts und/oder einer Verbindung mit dem Steuergerät, ausgebildet. Das Steuergerät kann in diesem Fall zum Betreiben des Gargeräts nicht zwingend erforderlich sein. Insbesondere kann das Steuergerät ein optionale Bestandteil des Gargerätesystems sein und/oder nachrüstbar sein. Vorteilhaft wird hierdurch erreicht, dass das Steuergerät zur nachträglichen Erweiterung des Funktionsumfangs des Gargeräts hinsichtlich der Steuerung mittels eines Mobilgeräts über eine drahtlose Datenverbindung eingesetzt werden kann.

Das Basis-Steuergerät ist mit dem Steuergerät, insbesondere dem Steuer-Kommunikationsmodul, vorzugsweise signalübertragend, insbesondere kabelgebunden oder drahtlos, verbunden. Das Basis-Steuergerät kann separat von dem Steuergerät ausgebildet, insbesondere in einem separaten Gehäuse angeordnet, sein. Das Basis-Steuergerät und das Steuergerät können zum Austausch von Steuerungsinformationen und/oder Zustandsinformationen miteinander verbunden sein. Über das Steuergerät kann das Basis-Steuergerät mit dem mindestens einen Mobilgerät signalübertragend verbunden sein. Vorzugsweise ist das Gargerät mittels des Basis-Steuergeräts aufgrund von Steuerbefehlen des Steuergeräts und/oder des mindestens einen Mobilgeräts steuerbar.

Vorzugsweise stehen das Basis-Steuergerät und/oder das Steuergerät mit einem Sensor des Gargerätesystems, insbesondere einem Temperatursensor, insbesondere einem Fleischthermometer, und/oder einem Drucksensor, in Signalverbindung. Der Sensor kann drahtlos oder über eine Kabelverbindung signalübertragend mit dem Basis-Steuergerät und/oder dem Steuergerät verbunden sein. Das Steuern des Gargeräts mittels des Basis-Steuergeräts und/oder des Steuergeräts kann anhand eines von dem Sensor bereitgestellten Signals erfolgen.

Gemäß einem weiteren Aspekt der Erfindung erfolgt das Steuern des Gargeräts mittels mindestens eines Mobilgeräts ohne das Erfassen der mit der Signalstärke der drahtlosen Datenverbindung korrelierenden Abtastwerte, insbesondere ohne das Beschränken der Steuerbarkeit mittels dieses mindestens einen Mobilgeräts in Abhängigkeit von dem Vergleichsergebnis. Beispielsweise kann bei Mobilgeräten, die beispielsweise zum Steuern für die Betriebssicherheit unkritischer Funktionen des Gargeräts verwendet werden, auf eine entsprechend aufwendige Erfassung und Verarbeitung der Signalstärke verzichtet werden. Derartige Mobilgeräte sind vorzugsweise über eine WiFi-Verbindung mit dem Steuergerät verbunden.

Das Erfassen der Abtastwerte, das Bestimmen des Prüfwerts, das Vergleichen des Prüfwerts mit dem Referenz-Prüfwert und/oder das Beschränken der Steuerbarkeit in Abhängigkeit von dem Vergleichsergebnis erfolgen vorzugsweise in vorgegebenen zeitlichen Abständen und/oder während des gesamten Zeitraums des Bestehens der drahtlosen Datenverbindung. Die Abtastwerte können hierzu in einem Abtast-Intervall vom maximal 10 s, insbesondere maximal 5 s, insbesondere maximal 2 s, insbesondere maximal 1 s, insbesondere maximal 0,5 s, insbesondere maximal 0,1 s, und/oder mindestens 0,001 s, insbesondere mindestens 0,1 s, insbesondere mindestens 1 s bestimmt werden. Das Bestimmen des Prüfwerts erfolgt vorzugsweise jeweils im Anschluss an das Erfassen einer vorbestimmten Anzahl an Abtastwerten, insbesondere von mindestens zwei Abtastwerten, insbesondere von mindestens drei Abtastwerten, und/oder von maximal zehn Abtastwerten. Das Vergleichen des Prüfwerts mit dem Referenz-Prüfwert erfolgt vorzugsweise jeweils im Anschluss an das Bestimmen des Prüfwerts. Das Beschränken der Steuerbarkeit in Abhängigkeit von dem Vergleichsergebnis erfolgt vorzugsweise jeweils im Anschluss an das Bestimmen des jeweiligen Vergleichsergebnisses.

Das Beschränken der Steuerbarkeit des Gargeräts mittels des Mobilgeräts kann auch unter der Voraussetzung erfolgen, dass die Signalqualität eine Referenz-Signalqualität unterschreitet. Die Signalqualität kann beispielsweise durch Übermitteln von Prüfdaten zwischen dem Steuergerät und dem Mobilgerät ermittelt werden.

Das Mobilgerät kann ein Mobiltelefon, insbesondere ein Smartphone, ein Tablet-PC, ein Laptop, ein Gargutsensor und/oder ein zum Gargerät zugehöriges, mobiles Bediengerät sein. Unter dem zum Gargerät zugehörigen, mobilen Bediengerät wird vorzugsweise ein vom Hersteller des Gargeräts vertriebenes und/oder ein zur Verbindung mit dem Gargerät, insbesondere herstellerseitig, vorkonfiguriertes und/oder ein als zum Gargerät zugehörig, insbesondere anhand eines Identifikationsmittels, identifizierbares Mobilgerät verstanden. Das Identifikationsmittel kann eine eindeutige, insbesondere in digitaler, insbesondere in digitaler und/oder analoger, Form gespeicherte, Identifikationsinformation zur Kennzeichnung der Zugehörigkeit zu dem Gargerät aufweisen. Hinsichtlich des Beschränkens der Steuerbarkeit des Gargeräts mittels des Mobilgeräts in Abhängigkeit von dem Vergleichsergebnis kann bei den zum Gargerät zugehörigen Bediengerät ein großzügigerer Maßstab, insbesondere ein höherer Schwellenwert, insbesondere ein höherer Referenz-Prüfwert, vorgegeben sein, als bei einem nicht zum Gargerät zugehörigen Mobilgerät. Das Mobilgerät ist vorzugsweise tragbar. Es kann hierzu ein Gewicht von maximal 50 N, insbesondere maximal 30 N, insbesondere maximal 10 N aufweisen. Das Bediengerät kann eine Mobil-Benutzerschnittstelle zum Austausch von Informationen mit dem Benutzer aufweisen. Die Bedien-Benutzerschnittstelle umfasst vorzugsweise eine Eingabeeinheit, insbesondere einen Schalter und/oder einen Taster und/oder einen berührungsempfindlichen Sensor, insbesondere einen berührungsempfindlichen Bildschirm und/oder ein Mikrofon, und/oder eine Ausgabeeinheit, insbesondere eine Lampe und/oder einen Bildschirm und/oder einen Lautsprecher.

Das Gargerät kann beispielsweise ein Kochfeld und/oder ein Kochfeldsystem mit mindestens einem Kochfeld und einer Dunstabzugsvorrichtung und/oder ein Ofen, insbesondere ein Dampfgarofen, und/oder eine Wärmeschublade und/oder ein Sous-Vide Gerät sein. Vorzugsweise ist das Gargerät ein Kochfeldsystem und das mindestens eine Mobilgerät ist ein zum Gargerät zugehöriges mobiles Bediengerät und/oder ein Gargutsensor und/oder ein Smartphone.

Der Umfang der Steuerbarkeit des Gargeräts mittels des Mobilgeräts kann das Steuern einer Heizeinheit, insbesondere einer Heizeinheit des Kochfelds und/oder des Ofens und/oder der Wärmeschublade, umfassen. Das Steuern mittels des Mobilgeräts kann manuell durch eine Eingabe des Benutzers über die Mobil-Benutzerschnittstelle und/oder automatisiert, insbesondere durch einen Steuerungsalgorithmus des Mobilgeräts, erfolgen. Das automatisierte Steuern kann beispielsweise anhand eines Kochrezepts erfolgen. Der Steuerungsalgorithmus kann hierbei zum Abarbeiten des Kochrezepts ausgebildet sein.

Zum Herstellen der drahtlosen Datenverbindung zwischen dem Steuergerät und dem Mobilgerät wird vorzugsweise eine eindeutige, einmalige Gerätekennung von dem Mobilgerät an das Steuergerät übermittelt. Zur erstmaligen Verbindung des Mobilgeräts mit dem Steuergerät kann eine Bestätigung des Benutzers an dem Steuergerät, insbesondere über die Steuer-Benutzerschnittstelle, erforderlich sein. Hierdurch wird zuverlässig gewährleistet, dass das Herstellen der drahtlosen Datenverbindung zumindest einmalig eine Eingabe an dem Steuergerät, insbesondere an dem Gargerät, selbst erforderlich macht. Das Verfahren ist somit besonders sicher gegenüber Manipulationsversuchen. Die Gerätekennung kann in dem Steuergerät, insbesondere in einer Steuer-Speichereinheit des Steuergeräts, gespeichert und für das erneute Herstellen der drahtlosen Datenverbindung mit dem Mobilgerät als Prüfschlüssel verwendet werden.

Zum Herstellen und/oder Aufrechterhalten der drahtlosen Datenverbindung kann ein dynamischer Schlüssel, also ein über die Zeit wechselnder Datenschlüssel, verwendet werden. Vorzugsweise wird der dynamische Schlüssel anhand eines Verschlüsselungs-Algorithmus nach vorgegebenen Zeitintervallen ausgetauscht. Die drahtlose Datenverbindung ist somit nochmals sicherer.

Das Bestimmen der mit der Signalstärke der drahtlosen Datenverbindung korrelierenden Abtastwerte kann mittels des Steuergeräts und/oder mittels des Mobilgeräts erfolgen. Insbesondere kann das jeweilige Kommunikationsmodul dazu ausgebildet sein, den Abtastwert in Form der Signalstärke und/oder eines mit der Signalstärke korrelierenden Messwerts zu erfassen. Der Abtastwert kann als Absolutwert einer Empfangsleistung, insbesondere mit logarithmischer Skalierung, insbesondere in Dezibel, und/oder als Relativwert im Verhältnis zu einer maximalen Empfangsleistung und/oder als ein entsprechender Spannungswert, insbesondere zwischen 0 V und 5 V, und/oder als ein entsprechendes digitales Signal, erfasst werden. Der jeweilige Abtastwert korreliert vorzugsweise mit, insbesondere entspricht vorzugsweise, einem, insbesondere von dem jeweiligen Kommunikationsmodul erfassten, RSSI-Wert (received signal strength indicator) und/oder einen ToF-Wert (Time-of-Flight), insbesondere wenn das jeweilige Kommunikationsmodul als Bluetooth-Modul, insbesondere als BLE-Modul, ausgebildet ist. Vorzugsweise korreliert der Prüfwert mit dem RSSI-Wert und/oder dem ToF-Wert.

Der Referenz-Prüfwert kann ein veränderbarer, insbesondere manuell und/oder automatisiert veränderbarer, und/oder ein vorbestimmter, nicht veränderbarer, Wert sein. Der Referenz-Prüfwert korreliert vorzugsweise mit, insbesondere entspricht vorzugsweise, einer bestimmten Signalstärke, insbesondere in einem Bereich von 0 % bis 90 %, insbesondere von 1 % bis 80 %, insbesondere von 20 % bis 75 %, insbesondere von 30 % bis 70 %, einer maximalen Signalstärke. Vorzugsweise korreliert der Referenz-Prüfwert mit einem Abstand zwischen dem Steuergerät und dem Mobilgerät in einem Bereich von 0 m bis 20 m, insbesondere von 1 m bis 15 m, insbesondere von 2,5 m bis 10 m, insbesondere von 4 m bis 8 m.

Das Beschränken der Steuerbarkeit des Gargeräts mittels des Mobilgeräts kann eine Reduktion des Umfangs von Steuerungsmöglichkeiten, insbesondere ein vollständiges Verhindern der Steuerbarkeit oder kein vollständiges Verhindern der Steuerbarkeit umfassen. Vorzugsweise wird bei der beschränkten Steuerbarkeit das Steuern zumindest einzelner, insbesondere aller, Heizeinheiten des Gargeräts, verhindert. Das Steuern beispielsweise der Dunstabzugsvorrichtung des Kochfeldsystems kann auch bei einer beschränkten Steuerbarkeit weiterhin möglich sein. Zum Beschränken der Steuerbarkeit können Steuerbefehle von dem Mobilgerät ignoriert oder blockiert werden. Alternativ kann die drahtlose Datenverbindung unterbrochen werden. Vorzugsweise wird der Benutzer über die beschränkte Steuerbarkeit, insbesondere über eine entsprechende Informationsausgabe an der Steuer-Benutzerschnittstelle und/oder an der Mobil-Benutzerschnittstelle, informiert. Steuereingaben an der Mobil-Benutzerschnittstelle können verhindert werden, insbesondere dadurch, dass entsprechende Eingaben verhindert, insbesondere dass Eingabefelder gesperrt und/oder nicht mehr angezeigt, werden. Das Steuergerät überträgt vorzugweise über die drahtlose Datenverbindung ein Signal an das Mobilgerät mit der Information, in welchem Umfang das Gargerät mittels des Mobilgeräts steuerbar ist, insbesondere, ob die Steuerbarkeit beschränkt ist.

Der Umfang der Steuerbarkeit des Gargeräts mittels des Mobilgeräts kann das Einschalten und/oder das Ausschalten des Gargeräts umfassen. Das Beschränken der Steuerbarkeit kann umfassen, dass das Einschalten des Gargeräts mittels des Mobilgeräts verhindert wird. Vorzugsweise wird das Gargerät, insbesondere die Heizeinheit, bedingt durch das Beschränken der Steuerbarkeit ausgeschaltet. Alternativ kann das Gargerät, insbesondere die mindestens eine Heizeinheit, gemäß dem zuletzt, vor dem Beschränken der Steuerbarkeit, empfangenen Steuerbefehl weiterbetrieben werden.

Vorzugsweise ist das Gargerät auch über die Steuer-Benutzerschnittstelle steuerbar. Der Umfang von Steuerungsmöglichkeiten über die Steuer-Benutzerschnittstelle des Steuergeräts kann größer oder gleich dem Umfang von Steuerungsmöglichkeiten über das Mobilgerät sein. Vorzugsweise werden Steuerbefehle über die Steuer-Benutzerschnittstelle gegenüber Steuerbefehlen von dem Mobilgerät vorrangig behandelt.

Gemäß einem Aspekt der Erfindung erfolgt das Beschränken der Steuerbarkeit des Gargeräts mittels des Mobilgeräts unter der Voraussetzung, dass der Prüfwert geringer ist als der Referenz-Prüfwert. Das Beschränken der Signalstärke erfolgt also vorzugsweise bei einer zu geringen Signalstärke und/oder bei einem zu großen Abstand zwischen dem Gargerät und dem Mobilgerät.

Gemäß einem Aspekt der Erfindung erfolgt das Bestimmen des Prüfwerts anhand von mindestens zwei, insbesondere mindestens drei, insbesondere mindestens fünf und/oder maximal einhundert, insbesondere maximal zehn, der Abtastwerte. Das Steuern des Gargeräts mittels des Mobilgeräts kann somit besonders robust und zuverlässig erfolgen. Die Steuerbarkeit des Gargeräts mittels des Mobilgeräts ist somit besonders robust gegenüber Messfehlern und Signalstörungen, welche zu einem kurzzeitigen Abfall der Signalstärke führen.

Gemäß einem Aspekt der Erfindung wird ein Streuwert der mehreren Abtastwerte, aus denen der Prüfwert bestimmt wird, ermittelt. Der Streuwert korreliert vorzugsweise mit, insbesondere entspricht vorzugsweise, der Differenz zwischen einem Maximalwert und einem Minimalwert der mehreren Abtastwerte und/oder einer Standardabweichung der mehreren Abtastwerte. Der Streuwert ist ein Maß für die Stabilität der Signalstärke. Vorzugsweise erfolgt das Beschränken der Steuerbarkeit unter Berücksichtigung des Streuwerts.

Gemäß einem Aspekt der Erfindung werden Profilinformationen des Mobilgeräts, insbesondere auf dem Steuergerät und/oder auf dem Mobilgerät, gespeichert. Die Profilinformationen werden vorzugsweise mittels des Steuergeräts und/oder des Mobilgeräts erfasst. Die Profilinformationen können eine einmalige Kennung, eine Kommunikationsadresse, insbesondere eine MAC-Adresse, Hardwareinformationen, insbesondere zu dem Kommunikationsmodul und/oder einem verbauten Computerchip, insbesondere einem Mobil-Prozessor, und/oder von Sensoren, insbesondere einem Kompass, Softwareinformationen, insbesondere zu dem auf dem Mobildgerät installierten Betriebssystem, Kommunikationsinformationen, beispielsweise einen digitalen Schlüssel, einen Korrekturwert, insbesondere zum Bestimmen eines Abstands zwischen dem Mobilgerät und dem Steuergerät anhand des mindestens einen Abtastwerts und/oder des Prüfwerts, ein Datum und/oder einen Zeitpunkt der, insbesondere erstmaligen, Herstellung der Datenverbindung, umfassen.

Abhängig von den Profilinformationen kann das Herstellen der drahtlosen Datenverbindung erfolgen. Es kann bestimmt werden, ob ein Referenz-Prüfwert und/oder ein Kalibrier-Prüfwert bestimmt werden muss, ob das Mobilgerät zum Steuern des Gargeräts geeignet ist und/oder welcher Anteil verfügbarer, insbesondere maximal über die drahtlose Datenverbindung steuerbarer, Funktionen des Gargeräts mittels des angeschlossenen Mobilgeräts steuerbar sind. Insbesondere kann mittels der Profilinformationen bestimmt werden, wie der Prüfwert anhand der mehreren Abtastwerte bestimmt wird und/oder in welchem Umfang die Steuerbarkeit des Gargeräts mittels des Mobilgeräts in Abhängigkeit von dem Vergleichsergebnis beschränkt wird.

Die Profilinformationen werden vorzugsweise für jedes Mobilgerät gespeichert, welches die drahtlose Datenverbindung mit dem Steuergerät zumindest einmalig eingegangen ist. Die Profilinformationen können zumindest teilweise von dem Mobilgerät bereitgestellt und/oder über die drahtlose Datenverbindung übertragen werden. Das Erfassen und/oder das Speichern der Kommunikationsinformationen kann automatisch ausgelöst werden, insbesondere durch das erstmalige Herstellen der drahtlosen Datenverbindung zwischen dem Steuergerät und dem Mobilgerät.

Der Prüfwert und/oder der Referenz-Prüfwert korrelieren vorzugsweise mit einem Abstand zwischen dem Mobilgerät und dem Steuergerät. Insbesondere können der Prüfwert und/oder der Referenz-Prüfwert jeweils als Wegstrecke, insbesondere in Metern, bestimmt und/oder bereitgestellt werden. Der Prüfwert kann dem momentanen Abstand zwischen dem Mobilgerät und dem Steuergerät entsprechen. Der Referenz-Prüfwert kann als Abstands-Schwellenwert angegeben sein, bei dessen Überschreitung, insbesondere durch den Prüfwert, die Steuerbarkeit des Gargeräts mittels des Mobilgeräts beschränkt wird.

Vorzugsweise wird der Abstand zwischen dem Mobilgerät und dem Steuergerät bestimmt anhand einer Exponentialfunktion und/oder einem Korrekturwert z. Die Basis der Exponentialfunktion kann die Eulerzahl e und/oder die Zahl 10 umfassen, insbesondere daraus bestehen. Der Exponent kann den mindestens einen Abtastwert umfassen, insbesondere daraus bestehen. Vorzugsweise umfasst der Exponent einen Mittelwert y mehrerer der Abtastwerte. Gemäß einem besonderen, insbesondere unabhängigen, Aspekt der Erfindung ist der Mittelwert der mehreren Abtastwerte gebildet durch den Levelled Average RSSI-Wert. Der Exponent kann ferner mindestens eine der Variablen v1, v2 umfassen. Die Variablen v1, v2 und/oder der Korrekturwert z können anhand der Profilinformationen, insbesondere anhand des Typs des Kommunikationsmoduls und/oder des auf dem Mobilgerät vorliegenden Betriebssystems und/oder im Zuge eines Kalibrierschritts, bestimmt werden. Die Variable v1 liegt vorzugsweise im Bereich von 10 bis 100, insbesondere im Bereich von 20 bis 80, insbesondere im Bereich von 30 bis 50, insbesondere im Bereich von 40 bis 45, insbesondere im Bereich von 42 bis 43. Die Variable v2 liegt vorzugsweise im Bereich von 0 bis -50, insbesondere im Bereich von -5 bis -25, insbesondere im Bereich von -10 bis -15, insbesondere im Bereich von -12 bis -13. Der Abstand D wird vorzugsweise bestimmt als Summe der Exponentialfunktion und dem Korrekturwert z. Vorzugsweise erfolgt das Bestimmen des Abstands D zwischen dem Mobilgerät und dem Steuergerät wie folgt:

$$D = e^{\left(\frac{y+v1}{v2}\right)} + z.$$

Der Korrekturwert z kann beispielsweise in Abhängigkeit von einem auf dem Mobilgerät installierten Betriebssystem bestimmt werden, insbesondere in Abhängigkeit davon, ob auf dem Mobilgerät ein IOS-Betriebssystem oder in Android-Betriebssystem installiert ist. Der Korrekturwert z liegt vorzugsweise im Bereich von -10 bis +10, insbesondere von -5 bis +5, insbesondere von -3,5 bis +3,5, insbesondere von -2 bis +2. Der Korrekturwert z kann gleich 0 oder ungleich 0 gewählt sein. Entsprechend kann auf einen Korrekturwert verzichtet werden. Der Korrekturwert z kann durch Bestimmen der mehreren Abtastwerte individuell für das jeweilige Mobilgerät bestimmt werden.

Das Erfassen der Abtastwerte und/oder das Bestimmen des Prüfwerts und/oder das Vergleichen des Prüfwerts mit dem Referenz-Prüfwert erfolgen vorzugsweise kontinuierlich, insbesondere während des Bestehens der drahtlosen Signalverbindung, insbesondere in regelmäßigen zeitlichen Abständen, insbesondere mit einer Frequenz von mindestens 0,1 Hz, insbesondere mindestens 1 Hz, insbesondere mindestens 5 Hz, und/oder maximal 100 Hz, insbesondere maximal 10 Hz, insbesondere maximal 1 Hz. Gemäß einem Aspekt der Erfindung kann das Beschränken der Steuerbarkeit des Gargeräts mittels des Mobilgeräts in Abhängigkeit von dem Vergleichsergebnis und mindestens einem weiteren Vergleichsergebnis, erfolgen. Das erste Vergleichsergebnis kann bestimmt werden anhand eines Vergleichs des RSSI-Werts mit einem RSSI-Schwellenwert. Der RSSI-Schwellenwert liegt vorzugsweise in einem Bereich von -10 bis -200, insbesondere im Bereich von -50 bis -100, insbesondere im Bereich von -65 bis -80. Beim Unterschreiten des RSSI-Schwellenwerts durch den RSSI-Wert kann die Steuerbarkeit des Gargeräts mittels des Mobilgeräts beschränkt werden.

Ein zweites Vergleichsergebnis kann bestimmt werden durch Vergleichen eines Abstands zwischen dem Mobilgerät und dem Steuergerät mit einem Abstands-Schwellenwert. Der Abstands-Schwellenwert liegt vorzugsweise im Bereich von 1 m bis 25 m, insbesondere im Bereich von 2 m bis 15 m, insbesondere im Bereich von 3 m bis 10 m, insbesondere beträgt dieser 5 m. Beim Überschreiten des Abstands-Schwellenwerts kann die Steuerbarkeit des Gargeräts mittels des Mobilgeräts beschränkt werden. Dadurch, dass das Beschränken der Steuerbarkeit des Gargeräts anhand der mindestens zwei Vergleichsergebnisse erfolgt, die auf unterschiedlichen Werten basieren, kann das Steuern des Gargeräts in besonders zuverlässiger und sicherer Weise erfolgen.

Gemäß einem Aspekt der Erfindung erfolgt das Beschränken der Steuerbarkeit des Gargeräts mittels des Mobilgeräts unter der Voraussetzung, dass der Streuwert geringer ist als ein Referenz-Streuwert. Der Referenz-Streuwert kann ein Absolutwert, insbesondere in einem Bereich von 5 dB bis 50 dB, insbesondere von 10 dB bis 20 dB, und/oder ein Relativwert, insbesondere in einem Bereich von 5 % bis 50 %, insbesondere von 10 % bis 30 %, des Prüfwerts und/oder des Referenz-Prüfwerts sein.

Das Beschränken der Steuerbarkeit kann auch erfolgen, wenn der Streuwert einen Referenz-Streuwert überschreitet. Somit kann das Beschränken der Steuerbarkeit erfolgen, wenn der Streuwert aufgrund mangelnder Signalqualität hoch ist.

Gemäß einem Aspekt der Erfindung wird der Prüfwert in Abhängigkeit von dem Streuwert, insbesondere bei einem Streuwert, der den Referenz-Streuwert übersteigt, verworfen. Hierunter wird verstanden, dass der Prüfwert für das Bestimmen der Steuerbarkeit des Gargeräts mittels des Mobilgeräts und/oder das Bestimmen des Vergleichsergebnisses unberücksichtigt bleibt.

Gemäß einem Aspekt der Erfindung umfasst das Bestimmen des Prüfwerts das Bestimmen eines Abtastmittelwerts der mehreren Abtastwerte. Das Bestimmen des Prüfwerts kann auch das Ermitteln der Änderungsrate der Abtastwerte über der Zeit umfassen. Insbesondere kann der Streuwert beim Bestimmen des Prüfwerts berücksichtigt werden. Hierdurch kann das Steuern des Gargeräts besonders robust und zuverlässig erfolgen.

Gemäß einem Aspekt der Erfindung werden die mehreren Abtastwerte zum Bestimmen des Prüfwerts über eine Messdauer in einem Bereich von 0,1 s bis 10 s, insbesondere von 0,5 s bis 5 s, insbesondere von 1 s bis 3 s, erfasst. Hierdurch wird der Einfluss kurzzeitiger Störungen der drahtlosen Datenverbindung, insbesondere auf das Vergleichsergebnis, reduziert. Das Steuern des Gargeräts kann somit besonders robust und zuverlässig erfolgen.

Gemäß einem Aspekt der Erfindung wird ein Kalibrier-Prüfwert als Prüfwert bei einem vorgegebenen Abstand zwischen dem Steuergerät und dem Mobilgerät bestimmt. Der Kalibrier-Prüfwert wird vorzugsweise anhand mindestens eines Prüfwerts, insbesondere anhand mehrerer Prüfwerte, und/oder anhand mehrerer Abtastwerte, insbesondere anhand von mindestens fünf, insbesondere mindestens zehn, insbesondere mindestens 50, insbesondere mindestens 100, und/oder maximal 1000, insbesondere maximal 500, Abtastwerten, bestimmt. Der vorgegebene Abstand kann, insbesondere absolut oder in Horizontalrichtung, maximal 50 m, insbesondere maximal 10 m, insbesondere maximal 5 m, insbesondere maximal 2 m, insbesondere 0 m, und/oder mindestens 1 m, insbesondere mindestens 2 m, insbesondere mindestens 5 m, insbesondere mindestens 10 m, betragen. Der Kalibrier-Prüfwert korreliert vorzugsweise mit, insbesondere entspricht vorzugsweise, der Signalstärke der drahtlosen Datenverbindung bei dem vorgegebenen Abstand. Der vorgegebene Abstand entspricht vorzugsweise demjenigen Abstand, bei dessen Überschreiten das Beschränken der Steuerbarkeit erfolgen soll. Vorzugsweise wird der Benutzer zum Bestimmen des Kalibrier-Prüfwerts mittels der Steuer-Benutzerschnittstelle und/oder der Mobil-Benutzerschnittstelle dazu aufgefordert, das Mobilgerät in dem vorgegebenen Abstand zu dem Steuergerät und/oder dem Gargerät anzuordnen und/oder diese Anordnung über die jeweilige Benutzerschnittstelle zu bestätigen. Der Kalibrier-Prüfwert wird vorzugsweise nach dem Bestätigen der Anordnung in dem vorgegebenen Abstand bestimmt. Hierdurch kann von der Signalstärke der drahtlosen Datenverbindung, insbesondere mit einem bislang unbekannten Mobilgerät, auf den Abstand zwischen dem Steuergerät und dem Mobilgerät geschlossen werden. Das Verfahren ist somit besonders robust, zuverlässig und sicher ausführbar.

Das Bestimmen des Kalibrier-Prüfwerts erfolgt vorzugsweise unter der Voraussetzung, dass der Streuwert geringer ist als der Referenz-Streuwert und/oder dass die Signalqualität höher ist als eine Referenz-Signalqualität.

Gemäß einem Aspekt der Erfindung erfolgt das Bestimmen des Referenz-Prüfwerts anhand des Prüfwerts. Eine manuelle Eingabe des Referenz-Prüfwerts kann hierdurch vermieden werden. Zudem kann die individuelle Sendeleistung des Mobilgeräts berücksichtigt werden. Vorzugsweise wird jedem einzelnen Mobilgerät, insbesondere der jeweiligen einzigartigen Gerätekennung, ein individueller Referenz-Prüfwert zugewiesen. Der Referenz-Prüfwert, insbesondere die Kombination aus dem Referenz-Prüfwert und der Gerätekennung, kann in der Steuer-Speichereinheit und/oder einer Mobil-Speichereinheit des Mobilgeräts gespeichert werden. Das Verfahren ist somit besonders sicher ausführbar und benutzerfreundlich.

Gemäß einem weiteren Aspekt der Erfindung erfolgt das Bestimmen des Referenz-Prüfwerts anhand des mindestens einen, insbesondere anhand von mindestens zwei, insbesondere anhand von mindestens drei, und/oder anhand von maximal fünf Kalibrier-Prüfwerten. Hierdurch kann das Beschränken der Steuerbarkeit des Gargeräts mittels des Mobilgeräts besonders präzise in Abhängigkeit von dem Abstand zwischen diesen Geräten erfolgen. Das Berücksichtigen der mehreren Kalibrier-Prüfwerte ermöglicht eine besonders präzise Bestimmung des Abstands zwischen dem Steuergerät und dem Mobilgerät. Zum Bestimmen der mehreren Referenz-Prüfwerte wird der Benutzer vorzugsweise, entsprechend dem vorstehend beschriebenen Verfahren, zum Anordnen des Mobilgeräts in unterschiedlichen Abständen zu dem Steuergerät aufgefordert und dazu, diese Anordnung jeweils zu bestätigen. Hierdurch können Einflüsse auf die Signalstärke berücksichtigt werden, die durch örtliche Gegebenheiten, wie beispielsweise durch Möbel, Gebäudeelemente, elektrische Geräte und/oder Störsignale, bedingt sind. Der Referenz-Prüfwert korreliert somit besonders präzise mit dem gewünschten Abstand, ab dem das Beschränken der Steuerbarkeit erfolgen soll. Das Verfahren ist somit besonders robust, zuverlässig und sicher ausführbar.

Gemäß einem weiteren Aspekt der Erfindung erfolgt das Bestimmen des Kalibrier-Prüfwerts und/oder des Referenz-Prüfwerts automatisch ausgelöst, insbesondere durch, insbesondere im direkten Anschluss an, das erstmalige Herstellen der drahtlosen Datenverbindung zwischen dem Steuergerät und dem Mobilgerät. Das Bestimmen des Referenz-Prüfwerts kann auch wiederholt, insbesondere aufgrund einer manuellen Benutzereingabe und/oder nach einer Unterbrechung der Stromzufuhr zu dem Steuergerät und/oder nach einem Softwareupdate des Steuergeräts und/oder des Mobilgeräts, erfolgen.

Gemäß einem weiteren Aspekt der Erfindung kann das Bestimmen des Referenz-Prüfwerts durch eine Benutzereingabe manuell erfolgen. Der Benutzer kann den Referenz-Prüfwert somit entsprechend seiner individuellen Anforderungen festlegen. Vorzugsweise ist das Ändern nur in einem bestimmten Bereich, insbesondere von maximal 50 %, insbesondere maximal 20 %, eines vorbestimmten oder eines zuvor ermittelten Referenz-Prüfwerts möglich. Hierdurch ist das Verfahren besonders sicher ausführbar.

Gemäß einem weiteren Aspekt der Erfindung erfolgt das Erweitern der Steuerbarkeit des Gargeräts mittels des Mobilgeräts in Abhängigkeit von dem Vergleichsergebnis. Das Erweitern der Steuerbarkeit kann auf den ursprünglichen, insbesondere vollumfänglichen, Steuerungsumfang erfolgen.

Das Erweitern der Steuerbarkeit erfolgt vorzugsweise nur unter mindestens einer der zusätzlichen Voraussetzung, dass der Benutzer dies an der Steuer-Benutzerschnittstelle bestätigt und/oder, dass die drahtlose Datenverbindung über die Dauer der beschränkten Steuerbarkeit nicht vollständig unterbrochen wurde. Ein derartiges Verfahren gewährleistet einen besonders hohen Bedienkomfort.

Gemäß einem weiteren Aspekt der Erfindung erfolgt das Erweitern der Steuerbarkeit des Gargeräts mittels des Mobilgeräts in Abhängigkeit von einer Schaltdauer, über welche die Steuerbarkeit beschränkt war. Die Schaltdauer bemisst sich vorzugsweise ab dem Zeitpunkt, zu dem das Beschränken der Steuerbarkeit des Gargeräts mittels des Mobilgeräts erfolgt und/oder über die Zeitspanne, über welche die Steuerbarkeit des Gargeräts mittels des Mobilgeräts lückenlos, also ununterbrochen, beschränkt ist. Vorzugsweise erfolgt das Erweitern der Steuerbarkeit unter der Voraussetzung, dass die Schaltdauer, über welche die Steuerbarkeit beschränkt war, maximal 60 s, insbesondere maximal 30 s, insbesondere maximal 10 s, beträgt. Ist diese Schaltdauer überschritten, kann das Erweitern der Steuerbarkeit vorzugsweise nur unter der zusätzlichen Voraussetzung erfolgen, dass eine Bestätigung des Benutzers an dem Steuergerät, insbesondere der Steuer-Benutzerschnittstelle erfolgt. Vorteilhaft wird hierdurch verhindert, dass ein nach längerer Zeit, insbesondere nach Stunden, wieder mit dem Steuergerät verbundenes Mobilgerät zu einer von dem Benutzer unbemerkten Aktivierung des Gargeräts führt.

Gemäß einem weiteren Aspekt der Erfindung wird ein optisches und/oder akustisches und/oder eines haptischen Warnsignal, insbesondere an dem Gargerät und/oder dem Steuergerät, insbesondere der Steuer-Benutzerschnittstelle, und/oder dem Mobilgerät, insbesondere der Mobil-Benutzerschnittstelle, in Abhängigkeit von dem Vergleichsergebnis ausgegeben. Das Warnsignal kann beispielsweise ausgegeben werden, wenn sich der Prüfwert dem Referenz-Prüfwert annähert, insbesondere wenn der Prüfwert den Referenz-Prüfwert in einem Bereich von 0 % bis 30 % des Referenz-Prüfwerts, insbesondere von 5 % bis 20 % des Referenz-Prüfwerts, übersteigt. Das Ausgeben des Warnsignals kann über die jeweilige BenutzerSchnittstelle des Gargeräts und/oder des Mobilgeräts, beispielsweise über den Bildschirm und/oder den Lautsprecher und/oder einen Vibrationsgenerator, insbesondere einen Vibrationsmotor, erfolgen. Das Verfahren gewährleistet einen besonders hohen Bedienkomfort, da der Benutzer davor gewarnt wird, versehentlich ein Beschränken der Steuerbarkeit herbeizuführen.

Gemäß einem weiteren Aspekt der Erfindung werden Informationen an einer Anzeigeeinheit des Mobilgeräts in Abhängigkeit von dem Vergleichsergebnis ausgegeben. Über die drahtlose Datenverbindung können generell Informationen, insbesondere Zustandsinformationen über das Gargerät, insbesondere Steuerinformationen und/oder Leistungsinformationen und/oder Sensorinformationen, insbesondere eines Temperatursensors und/oder eines Feuchtesensors und/oder eines Filtersensors und/oder Informationen über das Gargut, insbesondere Informationen über die Zusammensetzung und/oder die Haftqualität des Garguts, an das Mobilgerät übermittelt werden. Diese Informationen können an der Mobil-Benutzerschnittstelle, insbesondere dem Bildschirm, angezeigt werden. Die Statusinformationen können auch während der beschränkten Steuerbarkeit über die drahtlose Datenverbindung übermittelt und/oder an dem Mobilgerät angezeigt werden. Das von dem Vergleichsergebnis abhängige Ausgeben von Informationen kann den Hinweis auf die beschränkte Steuerbarkeit und/oder das Anzeigen oder Ausblenden von Eingabemöglichkeiten, insbesondere Eingabemasken, und/oder das Anzeigen oder Ausblenden von Steuerungssymbolen, umfassen. Das Steuern des Gargeräts mittels des Mobilgeräts kann somit besonders intuitiv erfolgen.

Eine weitere Aufgabe der Erfindung besteht darin, ein verbessertes Computerprogramm für ein Steuergerät zum Steuern eines Gargeräts bereitzustellen.

Diese Aufgabe wird gelöst durch ein Computerprogramm, insbesondere für ein Mobilgerät und/oder für ein Steuergerät zum Steuern eines Gargeräts, das zum Ausführen eines Verfahrens gemäß der vorstehenden Beschreibung ausgebildet ist. Das Computerprogramm ist vorzugsweise auf mindestens einer Steuer-Speichereinheit des Steuergeräts und/oder auf mindestens einer Mobil-Speichereinheit des Mobilgeräts abgespeichert. Das Computerprogramm kann auch auf einer einzigen oder auf mehreren separaten Speichereinheiten, insbesondere auf einem USB-Stick, abgespeichert sein und/oder auf einem Online-Datenspeicher hinterlegt sein.

Gemäß einem Aspekt der Erfindung ist das, insbesondere auf dem Mobilgerät und/oder auf dem Steuergerät, abgespeicherte Computerprogramm überschreibbar, insbesondere aktualisierbar. Beispielsweise kann das Mobilgerät und/oder das Steuergerät zum Durchführen eines Updates des Computerprogramms mittels eines lokalen Speichermediums, insbesondere eines USB-Sticks, und/oder von einer Online-Datenquelle, insbesondere über das Internet, insbesondere über eine Wi-Fi-Verbindung, ausgebildet sein. Insbesondere kann das Computerprogramm hinsichtlich des hinterlegten Referenz-Prüfwerts und/oder des Referenz-Streuwerts und/oder des vorgegebenen Abstands, insbesondere im Zuge eines Software-Updates, überschreibbar sein.

Eine weitere Aufgabe der Erfindung besteht darin, ein verbessertes Steuergerät zum Steuern eines Gargeräts zu schaffen.

Diese Aufgabe wird durch ein Steuergerät zum Steuern eines Gargeräts gelöst, aufweisend eine Steuer-Prozessoreinheit zum Verarbeiten von Daten, und mindestens eine mit der Steuer-Prozessoreinheit in Signalverbindung stehende Steuer-Speichereinheit mit einem darauf gespeicherten Computerprogramm gemäß der vorstehenden Beschreibung. Das Computerprogramm kann auf einer einzigen Steuer-Speichereinheit oder verteilt auf mehrere Steuer-Speichereinheiten des Steuergeräts und/oder Mobil-Speichereinheiten des Mobilgeräts, insbesondere ausschließlich des Steuergeräts, hinterlegt sein. Das Steuergerät weist vorzugsweise ein mit der Steuer-Prozessoreinheit in Signalverbindung stehendes Steuer-Kommunikationsmodul zum drahtlosen Übertragen von Daten, insbesondere von Steuerinformationen, auf. Das Steuer-Kommunikationsmodul ist vorzugsweise ein Funkmodul, insbesondere ein Bluetooth-Modul, insbesondere ein BLE-Modul. Vorzugsweise ist das Funkmodul zum Übertragen von Daten über eine Distanz von maximal 50 m, insbesondere maximal 20 m, insbesondere maximal 10 m, und/oder mindestens 2 m, insbesondere mindestens 5 m, ausgebildet. Hierdurch kann der Abstand zwischen dem Gargerät und dem Mobilgerät besonders präzise anhand der Signalstärke bestimmt werden. Das Steuer-Kommunikationsmodul ist vorzugsweise auch zur drahtgebundenen Übertragung von Daten, insbesondere von Steuer- und/oder Statusinformationen, ausgebildet. Hierzu kann das Steuer-Kommunikationsmodul eine serielle Schnittstelle und/oder eine Bus-Schnittstelle, insbesondere zum Verbinden mit unterschiedlichen und/oder mehreren Gargeräten und/oder mit dem Basis-Steuergerät aufweisen. Das Steuergerät kann als separates, insbesondere nachrüstbares, Modul ausgebildet sein.

Eine weitere Aufgabe der Erfindung besteht darin, ein verbessertes Gargerätesystem zu schaffen.

Diese Aufgabe wird gelöst durch ein Gargerätesystem mit mindestens einem Gargerät zum Erwärmen von Gargut, und einem mit dem mindestens einen Gargerät in Signalverbindung stehenden Steuergerät zum Steuern des Gargeräts gemäß der vorstehenden Beschreibung. Das Gargerät umfasst vorzugsweise mindestens eine Heizeinheit zum Erwärmen von Gargut, insbesondere ein Kochfeld mit mindestens einer Kochstelle und/oder einen Ofen, insbesondere einen Dampfgarofen, und/oder eine Wärmeschublade.

Weitere Vorteile, Merkmale und Einzelheiten der Erfindung ergeben sich aus der nachfolgenden Beschreibung eines Ausführungsbeispiels anhand der Figuren. Es zeigen:

Fig. 1    eine perspektivische Darstellung eines Gargerätesystems mit zwei Steuergeräten zum Steuern jeweils eines damit verbundenen Gargeräts zum Erwärmen von Gargut mittels zweier drahtlos mit den Steuergeräten verbundener Mobilgeräte,

Fig. 2    eine abstrahierte Darstellung eines der Steuergeräte und des drahtlos damit verbundenen Mobilgeräts in Fig. 1,

Fig. 3    vier exemplarische Verläufe I, II, III, IV einer Signalstärke der drahtlosen Datenverbindung zwischen einem der Steuergeräte und dem damit verbundenen Mobilgerät in Fig. 1,

Fig. 4    ein Ablaufdiagramm eines Verfahrens zum Beschränken der Steuerbarkeit eines der Gargeräte mittels des damit verbundenen Mobilgeräts anhand einer Signalstärke der drahtlosen Datenverbindung,

Fig. 5    ein Ablaufdiagramm eines Verfahrens zum Bestimmen eines Referenz-Prüfwerts auf Grundlage mehrerer mit einer Signalstärke der drahtlosen Datenverbindung korrelierender Abtastwerte, und

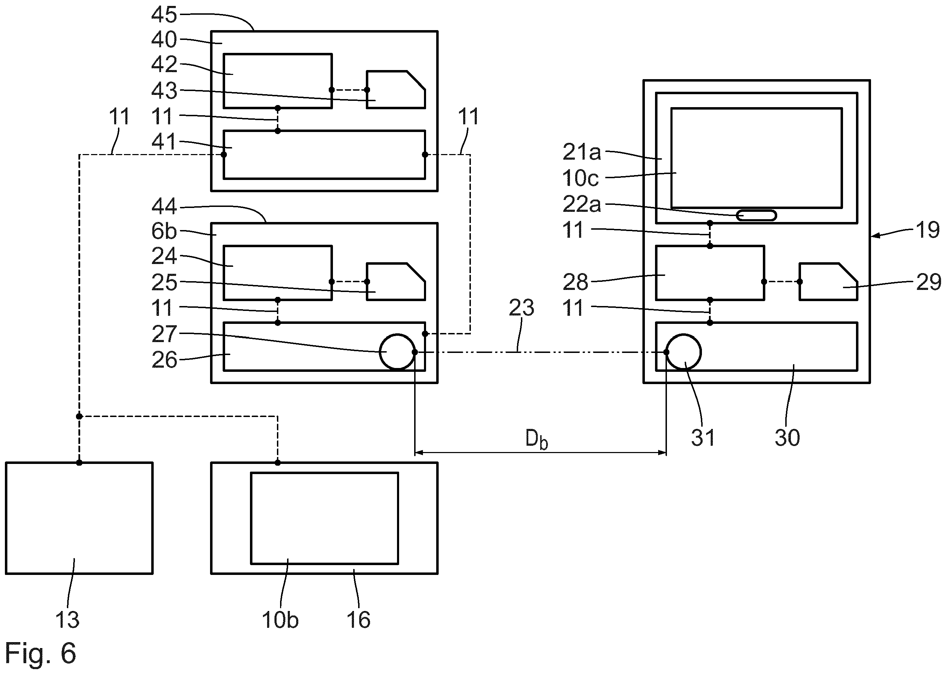

Fig. 6    eine abstrahierte Darstellung eines Gargerätesystems gemäß einem weiteren Ausführungsbeispiel, wobei ein Steuergerät des Gargerätesystems über ein Basis-Steuergerät mit dem Gargerät signalübertragend verbunden ist.

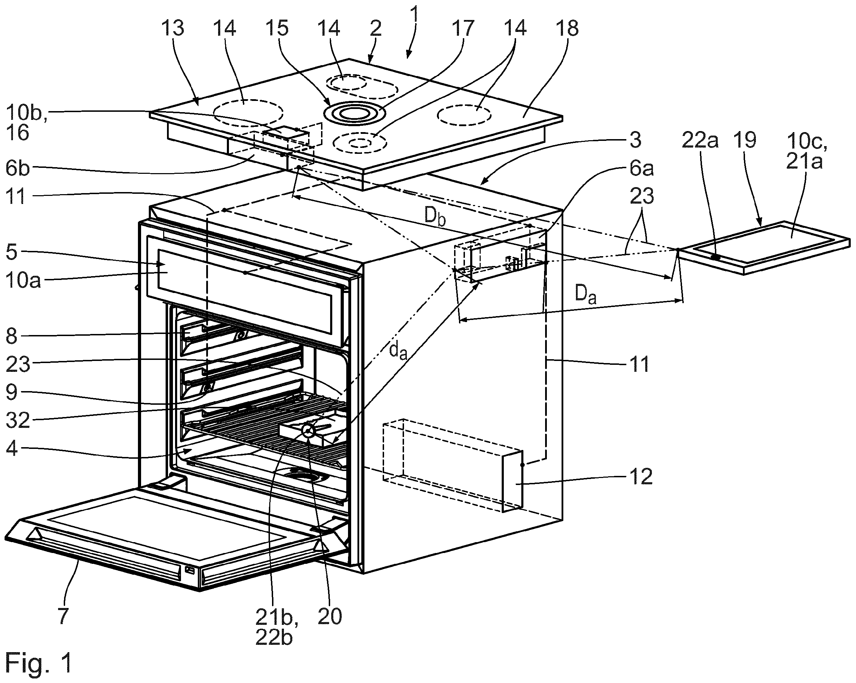

Anhand der Fig. 1 bis Fig. 5 ist ein Ausführungsbeispiel eines Gargerätesystems 1 beschrieben. Das Gargerätesystem 1 weist ein erstes Gargerät in Form eines Kochfeldsystems 2 und ein zweites Gargerät in Form eines Ofens 3 auf.

Der Ofen 3 umfasst eine Garkammer 4, in welche Gargut zum Erwärmen einbringbar ist, eine Ofen-Benutzerschnittstelle 5 zum Austausch von Informationen mit dem Benutzer, insbesondere zur Eingabe und Ausgabe von Informationen, und ein Steuergerät 6a zum Steuern des Ofens 3. Die Garkammer 4 ist mittels einer Garkammertür 7 reversibel verschließbar. Zum Erfassen der Temperatur und der Feuchtigkeit in der Garkammer 4 ist an einer Garkammerwand 8 ein Garkammersensor 9 angeordnet.

Die Ofen-Benutzerschnittstelle 5 umfasst einen berührungsempfindlichen Bildschirm 10a, insbesondere mit einem kapazitiven Foliensensor zur Berührungserkennung und einem OLED-Display. Eine Heizeinheit 12 des Ofens 3 ist dazu ausgebildet die Luft innerhalb der Garkammer 4 zu erhitzen. Das Steuergerät 6a steht über eine Kabelverbindung 11 in signalübertragender Verbindung mit der Ofen-Benutzerschnittstelle 5, dem Garkammersensor 9 und der Heizeinheit 12.

Das Kochfeldsystem 2 weist ein Kochfeld 13 mit vier Kochstellen 14, einer Dunstabzugsvorrichtung 15 und einer Kochfeld-Benutzerschnittstelle 16 auf. Die Dunstabzugsvorrichtung 15 umfasst eine Einströmöffnung 17, welche einen Kochgutträger 18, insbesondere in einer Draufsicht in einem zentralen Bereich des Kochgutträgers 18, durchdringt. Die Dunstabzugsvorrichtung 15 ist zum Abzug von Kochdünsten nach unten ausgebildet. Ein nicht dargestellter Lüfter ist zum Abzug der Kochdünste durch die Einströmöffnung 17 aus einem Bereich oberhalb des Kochgutträgers 18 nach unten ausgebildet.

Der Kochgutträger 18 kann eine Glas-Keramik-Platte aufweisen. Die Kochfeld-Benutzerschnittstelle 16 ist in einer Draufsicht im Bereich des Kochgutträgers 18 angeordnet. Die Kochfeld-Benutzerschnittstelle 16 weist eine Anzeigeeinheit 10b mit, insbesondere von LEDs, beleuchteten Steuersymbole auf. Die Anzeigeeinheit 10b ist, insbesondere sind die Steuersymbole jeweils, von einem nicht dargestellten, berührungsempfindlichen Sensor zur Eingabe von Benutzerbefehlen überlappt.

Das Kochfeldsystem 2 weist ein Steuergerät 6b zum Steuern des Kochfeldsystems 2, insbesondere des Kochfelds 13 mit den Kochstellen 14 und der Dunstabzugsvorrichtung 15 auf. Das Steuergerät 6b des Kochfeldsystems 2 kann die Merkmale des Steuergeräts 6a des Ofens 3 aufweisen. Die Steuergeräte 6a, 6b sind vorzugsweise identisch ausgebildet.

Das Gargerätesystem 1 weist ein erstes Mobilgerät in Form eines Mobiltelefons 19 und ein zweites Mobilgerät in Form eines Gargutsensors 20 auf. Das Mobiltelefon 19 weist eine Mobil-Benutzerschnittstelle 21a zum Informationsaustausch mit dem Benutzer auf. Die Mobil-Benutzerschnittstelle 21a umfasst einen berührungsempfindlichen Bildschirm 10c und einen Taster 22a. Der Gargutsensor 20 weist eine Mobil-Benutzerschnittstelle 21b mit einem Taster 22b auf.

Das Mobiltelefon 19 ist über eine drahtlose Datenverbindung 23 mit den Steuergeräten 6a, 6b signalübertragend verbunden. Der Gargutsensor 20 ist mit dem Steuergerät 6a über eine drahtlose Datenverbindung 23 signalübertragend verbunden.

Das Steuergerät 6b umfasst eine Steuer-Prozessoreinheit 24 zur Datenverarbeitung, eine Steuer-Speichereinheit 25 zum Speichern von Daten und eine Steuer-Kommunikationseinheit 26 zum Übertragen von Daten. Die Steuer-Kommunikationseinheit 26 ist zum Datenaustausch über die Kabelverbindung 11, insbesondere mit der Kochfeld-Benutzerschnittstelle 16, ausgebildet. Ferner ist die Steuer-Kommunikationseinheit 26 zum Datenaustausch über die drahtlose Datenverbindung 23, insbesondere mit dem Mobiltelefon 19 und/oder mit einem Gargutsensor 20 und/oder mit einem zum Gargerät 2 zugehörigen mobilen Bediengerät, ausgebildet. Zum drahtlosen Übertragen von Daten weist die Steuer-Kommunikationseinheit 26 ein Steuer-Funkmodul 27 auf. Das Steuer-Funkmodul 27 ist ein Bluetooth-Modul, insbesondere ein BLE-Modul.

Das Mobiltelefon 19 weist die Mobil-Benutzerschnittstelle 21a, eine Mobil-Prozessoreinheit 28 zur Datenverarbeitung, eine Mobil-Speichereinheit 29 zum Speichern von Daten und eine Mobil-Kommunikationseinheit 30 zum Übertragen von Daten, insbesondere zum kabelgebundenen und/oder kabellosen Übertragen von Daten, auf. Ein Mobil-Funkmodul 31 der Mobil-Kommunikationseinheit 30 ist zum kabellosen Übertragen von Daten, insbesondere über die drahtlose Datenverbindung 23, ausgebildet.

Auf der Steuer-Speichereinheit 25 ist ein Computerprogramm abgespeichert, das zum Ausführen des nachfolgend beschriebenen Verfahrens ausgebildet ist.

Die Funktionsweise des Gargerätesystem 1 mit den Steuergeräten 6a, 6b, insbesondere hinsichtlich deren Interaktion mit den Mobilgeräten 19, 20, zum Steuern der Gargeräte 2, 3 ist wie folgt:
Das Kochfeldsystem 2 und der Ofen 3 werden an einem nicht dargestellten Küchenunterschrank bereitgestellt. Das Kochfeldsystem 2 ist in eine Kochfeld-Aussparung einer nicht dargestellten Küchenarbeitsplatte eingesetzt. Der Ofen 3 ist in den Küchenunterschrank eingebaut.

Die Mobilgeräte 19, 20 werden an dem Gargerätesystem 1 bereitgestellt. Das Mobiltelefon 19 wird in einem Abstand $D_a$ zu dem Steuergerät 6a des Ofens 3 und in einem Abstand $D_b$ zu dem Steuergerät 6b des Kochfeldsystems 2 angeordnet. Der Gargutsensor 20 wird in einem Abstand $d_a$ zu dem Steuergerät 6a des Ofens 3 angeordnet. Insbesondere wird der Gargutsensor 20 in der Garkammer zum Erfassen der Temperatur eines Garguts 32 angeordnet. Im Detail bezieht sich der jeweilige Abstand $D_a$, $D_b$, $d_a$ auf den Abstand zwischen den jeweiligen Funkmodulen 27, 31.

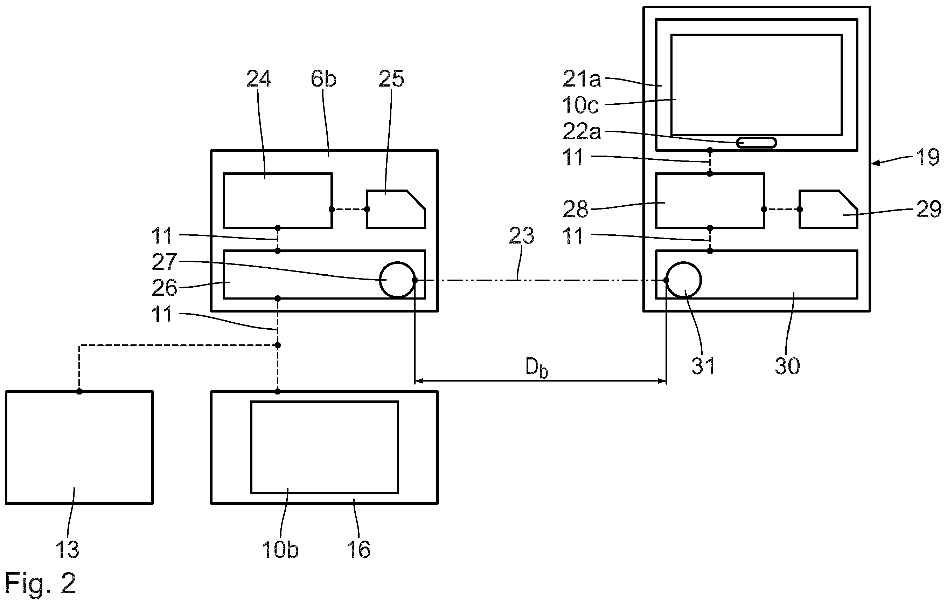

Anhand der Fig. 2 sind das Steuergerät 6b des Kochfeldsystems 2 und das Mobiltelefon 19 weiter im Detail beschrieben. Die nachfolgenden Aspekte zum Zusammenwirken des Steuergeräts 6b und des Mobiltelefons 19 gelten ebenso für das Zusammenwirken des Steuergeräts 6a mit dem Mobiltelefon 19 und mit dem Gargutsensors 20.

Das Kochfeldsystem 2 und das Mobiltelefon 19 werden eingeschaltet. Insbesondere werden das Steuer-Funkmodul 27 und das Mobil-Funkmodul 31 aktiviert. Das Aktivieren des jeweiligen Funkmoduls 27, 31 kann beispielsweise über eine Benutzereingabe an der Kochfeld-Benutzerschnittstelle 16 bzw. der Mobil-Benutzerschnittstelle 21a erfolgen.

Eine Verbindung zwischen dem Steuer-Funkmodul 27 und dem Mobil-Funkmodul 31 wird hergestellt. Das Steuern des Kochfeldsystems 2 mittels des Mobiltelefons 19 ist im Zuge dieser beschränkten Datenverbindung noch nicht möglich. Eine Bestätigung des Nutzers an der Kochfeld-Benutzerschnittstelle 16 ist erforderlich, um die drahtlose Datenverbindung 23 zum Steuern des Kochfeldsystems 2 mittels des Mobiltelefons 19 freizugeben. Diese Freigabe ist an eine eindeutige, insbesondere einmalige, Gerätekennung des Mobiltelefons 19 geknüpft. Hierdurch wird sichergestellt, dass das Steuern des Kochfeldsystems 2 über die drahtlose Datenverbindung 23 zumindest einmal eine Bestätigung des Benutzers an dem Kochfeldsystem 2 erfordert. Die Freigabe wird dabei nur für ein bestimmtes, eindeutig identifizierbares Mobilgerät 19, 20 erteilt. Dieses Verfahren verhindert, dass nicht autorisierte Mobilgeräte drahtlos, also aus der Ferne, Zugriff auf Steuerungsfunktionen des Gargeräts 2, 3 erlangen können.

Vorzugsweise ist eine weitere Voraussetzung dafür, dass das Mobilgerät 19, 20 zum Steuern des Gargeräts 2, 3 über die drahtlose Verbindung 23 autorisiert wird, dass ein dynamischer Schlüssel, beispielsweise in Form eines digitalen Codes, insbesondere in bestimmten zeitlichen Abständen, von dem Mobilgerät 19, 20 über die drahtlose Datenverbindung 23 an das Steuergerät 6a, 6b übertragen wird. Dieser dynamische Schlüssel ist dadurch gekennzeichnet, dass er nach Ablauf einer bestimmten Zeitdauer automatisiert geändert wird. Hierdurch kann die Sicherheit der Steuerung der Gargeräte 2, 3 über die drahtlose Datenverbindung 23 gegenüber Manipulationsversuchen nochmals gesteigert werden.

Die drahtlose Datenverbindung 23 zwischen dem Mobiltelefon 19 und dem Steuergerät 6b des Kochfeldsystems 2 ist hergestellt. Das Mobiltelefon 19 kann zum Steuern des Kochfeldsystems 2 verwendet werden.

Auf dem Bildschirm 10c der Mobil-Benutzerschnittstelle 21a werden Steuerungssymbole angezeigt, welche den steuerbaren Komponenten des Kochfeldsystems 2, nämlich den Kochstellen 14 und der Dunstabzugsvorrichtung 15, entsprechen. Über eine Benutzereingabe an dem berührungsempfindlichen Bildschirm 10c kann die Leistung der Kochstellen 14 und der Dunstabzugsvorrichtung 15 eingestellt werden. Die einem derartigen Steuerbefehl entsprechenden Daten werden von der Mobil-Prozessoreinheit 28 verarbeitet und mittels der Mobil-Kommunikationseinheit 30, insbesondere mittels des Mobil-Funkmoduls 31, über die drahtlose Datenverbindung 23 zu dem Steuergerät 6b übertragen. Das Steuergerät 6b empfängt die Steuerdaten mittels der Steuer-Kommunikationseinheit 26, insbesondere mittels des Steuer-Funkmoduls 27, verarbeitet die Steuerdaten mittels der Steuer-Prozessoreinheit 24 und stellt über die jeweilige Kabelverbindung 11 ein Signal zum Steuern der Kochstellen 14 und/oder der Dunstabzugsvorrichtung 15 bereit.

Informationen über die momentane Leistung der Kochstellen 14 und/oder der Dunstabzugsvorrichtung 15 werden von dem Steuergerät 6b erfasst und über die drahtlose Datenverbindung 23 an das Mobiltelefon 19 übertragen. Über den Bildschirm 10c werden diese Daten dem Benutzer angezeigt.

Der Umfang der Steuerungsmöglichkeiten des Mobiltelefons 19 im Hinblick auf das Kochfeldsystem 2 umfasst also das Steuern der Kochstellen 14 und das Steuern der Dunstabzugsvorrichtung 15. Statusinformationen zu dem Kochfeldsystem 2, die das Mobiltelefon 19 über die drahtlose Datenverbindung 23 von dem Steuergerät 6b erhält, umfassen Leistungswerte der Kochstellen 14 und der Dunstabzugsvorrichtung 15 und vorzugsweise auch Sensordaten, insbesondere zu Temperaturen der Kochstellen 14 und/oder einer Luftfeuchtigkeit in der Dunstabzugsvorrichtung 15 und/oder einer Filterkapazität eines Filters der Dunstabzugsvorrichtung 15 und/oder Stillstandszeiten und/oder Laufzeiten der Kochstellen 14 und/oder der Dunstabzugsvorrichtung 15 und/oder die hinsichtlich der Kochstellen 14 und/oder der Dunstabzugsvorrichtung 15 vorgenommenen Steuervorgänge.

Der Umfang der Steuerungsmöglichkeiten des Mobiltelefons 19 und/oder des Gargutsensors 20 in Hinblick auf den Ofen 3 umfasst die Temperatur und/oder die Feuchtigkeit innerhalb der Garkammer 4, insbesondere die Leistung der Heizeinheit 12. Statusinformationen zu dem Ofen 3, welche von dem Steuergerät 6a über die drahtlose Datenverbindung 23 an das Mobiltelefon 19 und/oder den Gargutsensor 20 übertragen werden können, umfassen die Temperatur und/oder die Feuchtigkeit innerhalb der Garkammer 4 und/oder die Leistung der Heizeinheit 12.

Der Gargutsensor 20 kann mittels des Tasters 22b aktiviert werden. Insbesondere kann mittels des Tasters 22b ein Kochprogramm ausgewählt und gestartet werden. Der Gargutsensor 20 kann Steuerbefehle zum automatisierten Einstellen der Feuchtigkeit und der Temperatur in der Garkammer 4 an das Steuergerät 6a übermitteln. Auch das Mobiltelefon 19 kann Steuerbefehle automatisiert an das jeweilige Steuergerät 6a, 6b übermitteln. Beispielsweise kann das automatisierte Steuern im Zuge des Abarbeitens eines Kochrezepts erfolgen. Der Umfang der Steuerungsmöglichkeiten bei der automatisierten Steuerung der Gargeräte 2, 3 mittels der Mobilgeräte 19, 20 entspricht dem Umfang von Steuerungsmöglichkeiten bei der manuellen Steuerung.

Das Steuern des Kochfeldsystems 2 kann auch mit der Kochfeld-Benutzerschnittstelle 16 erfolgen. Vorzugsweise wird eine Benutzereingabe über die Benutzerschnittstelle 5, 16 an dem Gargerät 2, 3 in Hinblick auf eine Steuerungsinformation von dem Mobilgerät 19, 20 vorrangig behandelt. Steuerungsinformationen aufgrund von Benutzereingaben an den Benutzerschnittstellen 5, 16 der Gargeräte 2, 3 werden vorzugsweise über die drahtlose Datenverbindung 23 an die Mobilgeräte 19, 20 übermittelt. Die Steuerungsinformationen können an dem Bildschirm 10c angezeigt werden.

Der vorstehend beschriebene Umfang an Steuerungsmöglichkeiten der Gargeräte 2, 3 mittels der Mobilgeräte 19, 20 kann in Abhängigkeit von der Signalstärke $P$ der drahtlosen Datenverbindung 23 beschränkt werden. Die Signalstärke $P$ der drahtlosen Datenverbindung 23 zwischen dem jeweiligen Steuergerät 6a, 6b und dem damit verbundenen Mobilgerät 19, 20 variiert in Abhängigkeit von dem jeweiligen Abstand $D_a$, $D_b$, $d_a$ zwischen diesen Geräten und in Abhängigkeit von individuellen Einflussfaktoren, wie beispielsweise zwischen diesen Geräten befindlichen Gegenständen.

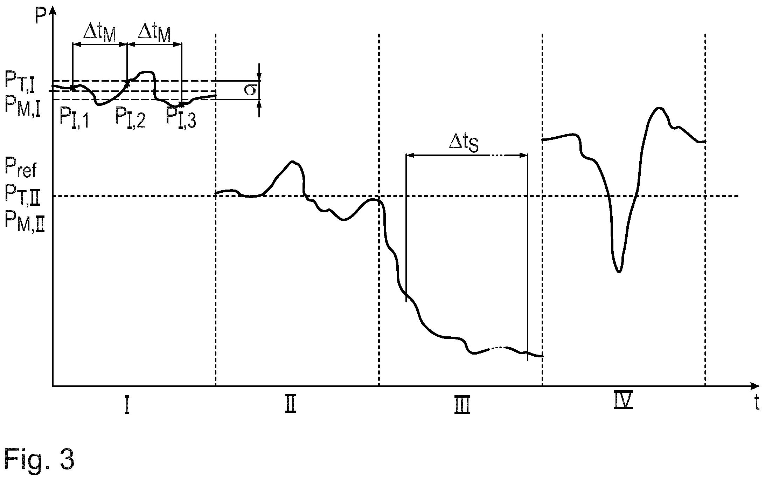

Anhand der Fig. 3 sind exemplarisch vier Verläufe der Signalstärke $P$ über der Zeit $t$ dargestellt. Die gemessene Signalstärke $P$ unterliegt Schwankungen aufgrund von Messtoleranzen und Umgebungseinflüssen. Der erste exemplarische Verlauf I der Signalstärke $P_I$ liegt bei einer Anordnung des Mobiltelefons 19 in einem Nahbereich des Steuergeräts 6b vor, insbesondere bei dem Abstand $D_{b,0}$ = 1 m. Der zweite exemplarische Verlauf II der Signalstärke $P_{II}$ liegt bei einem mittleren Abstand $D_{b,1}$ = 5 m vor. Der dritte exemplarische Verlauf III der Signalstärke $P_{III}$ liegt bei einen zunehmenden Abstand $D_b$ des Mobiltelefons 19 von dem Steuergerät 6b von dem mittleren Abstand $D_{b,1}$ zu dem großen Abstand $D_{b,2}$ = 10 m vor. Der vierte exemplarische Verlauf IV der Signalstärke $P_{IV}$ der drahtlosen Datenverbindung 23 zwischen dem Mobiltelefon 19 und dem Steuergerät 6b kann bei dem mittleren Abstand $D_{b,1}$ erfasst werden, wobei der kurzzeitige Einbruch der Signalstärke $P_{IV}$ durch eine Signalstörung bedingt ist.

Nach dem erstmaligen Herstellen der drahtlosen Datenverbindung 23 zwischen dem jeweiligen Mobilgerät 19, 20 und dem jeweiligen Steuergerät 6a, 6b wird ein Referenz-Prüfwert $P_{ref}$ bestimmt. Hierzu wird dem Benutzer mittels der Kochfeld-Benutzerschnittstelle 16 angezeigt, dass das Mobilgerät 19 in dem mittleren Abstand $D_{b,1}$ zu dem Kochfeldsystem 2, insbesondere zu dem Steuergerät 6b, angeordnet werden soll. Der Benutzer nimmt die entsprechende Anordnung des Mobilgeräts 19, 20 vor und bestätigt diese durch eine Eingabe an der Kochfeld-Benutzerschnittstelle 16. Mittels des Steuergeräts 6b, insbesondere des Steuer-Funkmoduls 27, werden in einem Abtast-Intervall $\Delta t_M$ = 1 s aufeinander folgend n=3 Abtastwerte $P_i$, nämlich $P_{I,1}$, $P_{I,2}$, $P_{I,3}$, erfasst, die einer momentanen Signalstärke P der drahtlosen Verbindung 23 entsprechen. Die nachfolgend beschriebenen Rechenschritte und/oder Vergleichsvorgänge werden mittels des Steuergeräts 6b, insbesondere der Steuer-Prozessoreinheit 24, ausgeführt. Zu den Abtastwerten $P_i$ wird ein Abtastmittelwert $P_M$ gemäß folgender Formel bestimmt:

$$P_M = \frac{\Sigma_{i=1}^n (P_i)}{n} \tag{1}$$

Ein Prüfwert $P_T$ wird mit dem Abtast-Mittelwert $P_M$ gleichgesetzt $P_T = P_M$. Der Referenz-Prüfwert $P_{ref}$ kann über die Benutzerschnittstelle 5, 16 des jeweiligen Gargeräts 2, 3 auch manuell eingegeben oder geändert werden. Vorzugsweise ist die Benutzereingabe aus Sicherheitsgründen durch einen Mindestwert für den Referenz-Prüfwert $P_{ref}$ beschränkt.

Die Standardabweichung $\sigma$ der Abtastwerte $P_i$ wird nach folgender Formel bestimmt:

$$\sigma = \sqrt{\frac{\Sigma_{i=1}^n (P_i - P_M)^2}{n}} \tag{2}$$

Es wird geprüft, ob die Standardabweichung $\sigma$ kleiner als 10 % des Prüfwerts $P_T$ ist:

$$\sigma < 0{,}1 * P_T \tag{3}$$

Ist dieses Kriterium erfüllt, wird der Prüfwert $P_T$ bei dem mittleren Abstand $D_{b,1}$ als Referenzwert $P_{ref}$ übernommen $P_{ref} = P_T$. Andernfalls wird das Erfassen und Auswerten er Abtastwerte $P_i$ solange wiederholt, bis das obige Prüfkriterium erfüllt ist und der Referenzwert $P_{ref}$ somit bestimmt werden kann.

Während des Bestehens der drahtlosen Datenverbindung 23 werden im Intervall $\Delta t_M$ fortwährend Abtastwerte $P_i$ bestimmt. Zu jeweils drei aufeinanderfolgenden Abtastwerten $P_i$ wird der Abtastmittelwert $P_M$ bestimmt. Zum Bestimmen eines Vergleichsergebnisses wird der Prüfwert $P_T$ mit dem Referenz-Prüfwert $P_{ref}$ verglichen. Gilt

$$P_T \geq P_{ref} \tag{4}$$

wird die Steuerbarkeit des Gargeräts 2, 3 mittels des Mobilgeräts 19, 20 nicht beschränkt. Gilt hingegen

$$P_T < P_{ref} \tag{5}$$

und liegt dieses Vergleichsergebnis unterbrechungsfrei mindestens über eine Schaltdauer $\Delta t_S$ = 5 s vor, so wird die Steuerbarkeit des Gargeräts 2, 3 mittels des Mobilgeräts 19, 20 beschränkt. Mit anderen Worten müssen sechs aufeinanderfolgende Prüfwerte $P_T$ unterhalb des Referenz-Prüfwerts $P_{ref}$ liegen, damit die Steuerbarkeit des Gargeräts 2, 3 mittels des Mobilgeräts 19, 20 beschränkt wird. Somit wird verhindert, dass kurzzeitige Signallücken zu einer ungewünschten Unterbrechung der drahtlosen Datenverbindung 23 führen können. Steigt die Signalstärke P und damit der Prüfwert $P_T$ innerhalb der Schaltdauer $\Delta t_S$ wieder an, sodass der Referenz-Prüfwert $P_{ref}$ überschritten wird, bleibt die drahtlose Datenverbindung 23 aufrecht erhalten.

Erreicht der Prüfwert $P_T$ den Referenz-Prüfwert $P_{ref}$ wird vorzugsweise ein Warnton über einen nicht dargestellten Lautsprecher der Mobil-Benutzerschnittstelle 21a ausgegeben und ein Warnhinweis wird auf dem Bildschirm 10c angezeigt. Hierdurch wird der Benutzer informiert, dass der Steuerumfang nach Ablauf der Schaltdauer $\Delta t_S$ be-

schränkt wird, wenn das entsprechende Mobilgerät 19, 20 nicht wieder an dem Gargerät 2, 3 angeordnet wird, um die empfangene Signalstärke P zu erhöhen.

Im Zuge des dritten exemplarischen Verlaufs III in der Fig. 3 wird die Steuerbarkeit des Gargeräts 2, 3 mittels des Mobilgeräts 19, 20 beschränkt, da der Prüfwert $P_T$ über die Schaltdauer $\Delta$ts hinweg geringer ist als der Referenz-Prüfwert $P_{ref}$. Beim vierten exemplarischen Verlauf IV der Signalstärke P erfolgt keine Beschränkung der Steuerbarkeit des Gargeräts 2, 3 mittels des Mobilgeräts 19, 20, da der Prüfwert $P_T = P_M$ stets oberhalb des Referenz-Prüfwerts $P_{ref}$ liegt.

Wird die Steuerbarkeit des Gargeräts 2, 3 mittels des Mobilgeräts 19, 20 beschränkt, kann nur noch die Dunstabzugsvorrichtung 15 gesteuert werden. Das Steuern des Kochfelds 13 und des Ofens 3 mittels des Mobilgeräts 19, 20 wird blockiert. Das heißt, dass das jeweilige Steuergerät 6a, 6b Steuerbefehle der Mobilgeräte 19, 20 nicht mehr in Steuersignale zum Steuern des Kochfelds 13 oder des Ofens 3 umsetzt. Zudem wird die Mobil-Benutzerschnittstelle 21a, insbesondere der Bildschirm 10c, so angepasst, dass keine Benutzereingabe für eine entsprechende Steuerung des Kochfelds 13 und des Ofens 3 mehr möglich ist. Der Umfang der über die drahtlose Datenverbindung 23 übertragenen Statusinformationen bleibt unverändert. Bei einer Signalstärke P, bei der die Steuerbarkeit beschränkt ist, werden Statusinformationen weiterhin auf das Mobiltelefon 19 übertragen und an dem Bildschirm 10c angezeigt.

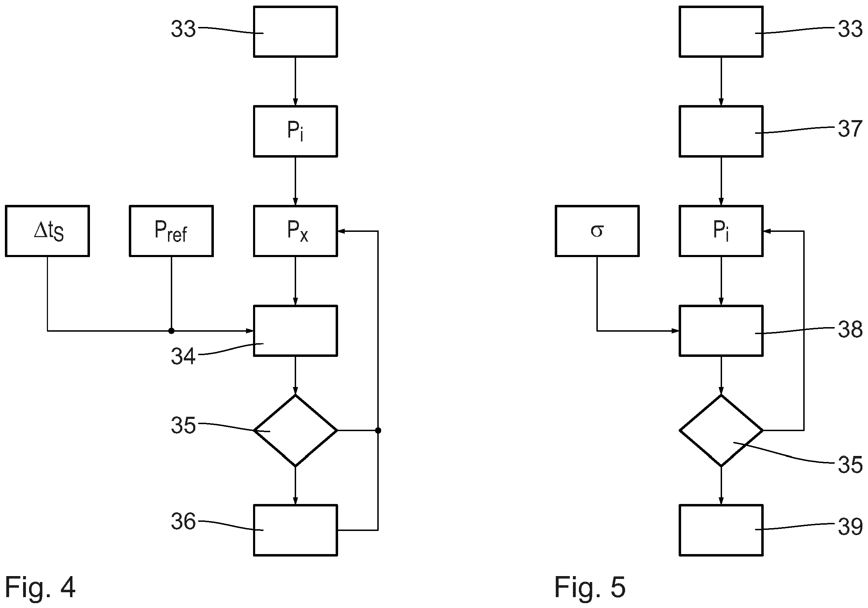

Anhand der Fig. 4 ist das oben beschriebene Verfahren zum Bestimmen des Referenz-Prüfwerts $P_{ref}$ veranschaulicht. Block 33 symbolisiert das Herstellen der drahtlosen Datenverbindung 23 zwischen dem Gargerät 2, 3 und dem Mobilgerät 19, 20. Block 34 symbolisiert das Vergleichen des Prüfwerts $P_T$ mit dem Referenz-Prüfwert $P_{ref}$ sowie das Überprüfen, ob dieses Vergleichsergebnis unterbrechungsfrei mindestens über die Schaltdauer $\Delta$ts vorliegt. Block 35 symbolisiert die Entscheidung auf Grundlage des Ergebnisses aus Block 34. Block 36 symbolisiert das Beschränken der Steuerbarkeit des Gargeräts 2, 3 mittels des Mobilgeräts 19, 20. Die übrigen Blöcke betreffen das Bestimmen des in dem jeweiligen Block angetragenen Werts.

Anhand der Fig. 5 ist das oben beschriebene Verfahren zum Beschränken der Steuerbarkeit des Gargeräts 2, 3 mittels des Mobilgeräts 19, 20 veranschaulicht. Block 37 symbolisiert das Anordnen des Mobilgeräts 19, 20 in dem Abstand $D_{b,1}$ zu dem Gargerät 2, 3, insbesondere zu dem Steuergerät 6a, 6b. Block 38 symbolisiert das Prüfkriterium, betreffend die Standardabweichung $\sigma$ zum Bestimmen des Referenz-Prüfwerts $P_{ref}$. Block 39 symbolisiert das Bestimmen des Referenz-Prüfwerts $P_{ref}$ gemäß dem Abtastmittelwert $P_M$. Die übrigen Blöcke betreffen das Bestimmen des in dem jeweiligen Block angetragenen Werts.

Der Umfang von Steuerungsmöglichkeiten des jeweiligen Gargeräts 2, 3 mittels des jeweiligen Mobilgeräts 19, 20 kann automatisiert auf den unbeschränkten Steuerumfang erweitert werden. Das Erweitern des Umfangs der Steuerbarkeit wird von dem jeweiligen Steuergerät 6a, 6b vorgenommen, wenn die folgenden beiden Prüfkriterien erfüllt sind. Der Prüfwert $P_T$ muss den Referenz-Prüfwert $P_{ref}$ erreichen oder überschreiten:

$$P_T \geq P_{ref} \tag{6}$$

Dieser Anstieg des Prüfwerts $P_T$ muss vor Ablauf einer Sperrdauer $\Delta t_R = 30$ s erfolgen. Ist das Prüfkriterium nicht innerhalb der Sperrdauer $\Delta t_R$ erfüllt, kann das Erweitern des Steuerumfangs nicht mehr automatisiert erfolgen. Eine Bestätigung des Benutzers an der Ofen-Benutzerschnittstelle 5 oder der Kochfeld-Benutzerschnittstelle 16 ist erforderlich, um die uneingeschränkte Steuerbarkeit des jeweiligen Gargeräts 2, 3 mittels des jeweiligen Mobilgeräts 19, 20 wiederherzustellen.

Anhand der Fig. 5 ist ein weiteres Ausführungsbeispiel des Verfahrens zum Steuern eines Gargeräts 2, 3, des Computerprogramms, des Steuergeräts 6a, 6b bzw. des Gargerätesystems 1 beschrieben. Im Unterschied zu dem vorstehend beschriebenen Ausführungsbeispiel ist das Steuergerät 6b über ein Basis-Steuergerät 40 mit dem Kochfeld 13 und der Kochfeld-Benutzerschnittstelle 16 signalübertragend verbunden. Das Basis-Steuergerät 40 ist zum Steuern des Kochfelds 13 anhand von Bedieneingaben über die Benutzerschnittstelle 16 und/oder anhand von Steuerbefehlen des Steuergeräts 6b ausgebildet. Zum Datenaustausch mit dem Steuergerät 6b, dem Kochfeld 13 und der Kochfeld-Benutzerschnittstelle 16 umfasst das Basis-Steuergerät 40 eine Basis-Kommunikationseinheit 41. Ferner umfasst das Basis-Steuergerät 40 eine Basis-Prozessoreinheit 42 zur Datenverarbeitung und eine Basis-Speichereinheit 43 zum Speichern von Daten. Mit dem Kochfeld 13, der Kochfeld-Benutzerschnittstelle 16 und dem Steuergerät 6b steht das Basis-Steuergerät 40 über eine Kabelverbindung 11 in Signalverbindung. Das Basis-Steuergerät 40 weist vorzugsweise ein von einem Steuer-Gehäuse 44 des Steuergeräts 6b separates Basis-Gehäuse 45 auf.

Das Basis-Steuergerät 40 ist zum Steuern des Kochfelds 13 und der Dunstabzugsvorrichtung 15, insbesondere unabhängig von dem Steuergerät 6b, ausgebildet. Die Grundfunktionen des Kochfeldsystems 2 können somit unabhängig von einem Mobilgerät 19, 20 und/oder einem Steuerbefehl des Steuergeräts 6b eingestellt werden.

Das Steuergerät 6b des Kochfeldsystems 2 unterscheidet sich von dem Steuergerät 6a des Ofens 3 dadurch, dass es zum Austausch von Daten mit dem Basis-Steuergerät 40 ausgebildet ist, nicht jedoch zum unmittelbaren Steuern des Gargeräts 2, 3, insbesondere einer Heizeinheit 12, von Kochstellen 14 und/oder einer Dunstabzugsvorrichtung 15. Das Basis-Steuergerät 40 unterscheidet sich von den Steuergeräten 6a, 6b dahingehend, dass es ohne ein Steuer-Funkmodul 27 zum Herstellen einer drahtlosen Datenverbindung 23 mit einem Mobilgerät 19, 20 ausgebildet ist.

Gemäß einem Aspekt der Erfindung ist das Steuergerät 6b als nachrüstbares Modul ausgebildet. Das Basis-Steuergerät 40 kann zum Nachrüsten des Steuergeräts 6b mit einer entsprechenden Schnittstelle ausgebildet sein.

Im Unterschied zu dem vorstehend beschriebenen Ausführungsbeispiel erfolgt das Steuern des Kochfeldsystems 2, anhand des Mobilgeräts 19 mittels des Steuergeräts 6b über das Basis-Steuergerät 40. Entsprechend des zuvor beschriebenen Ausführungsbeispiels stellt das Steuergerät 6b das Signal zum Steuern des Kochfelds 13 über die Kabelverbindung 11 an dem Basis-Steuergerät 40 bereit. Das Basis-Steuergerät 40 stellt ein entsprechendes Signal zum Steuern des Kochfeldsystems 2, an dem Kochfeld 13, insbesondere den Kochstellen 14, und/oder der Dunstabzugsvorrichtung 15 bereit.

Gemäß einem Aspekt der Erfindung werden die an dem Steuergerät 6a, 6b und/oder dem Basis-Steuergerät 40 von der Kochfeld-Benutzerschnittstelle 16 empfangenen Steuerbefehle vorrangig behandelt. Darunter wird verstanden, dass beim Eingang unterschiedlicher Steuerbefehle von der Kochfeld-Benutzerschnittstelle 16 und dem Mobilgerät 19, insbesondere über das Steuergerät 6a, 6b, die von der Kochfeld-Benutzerschnittstelle 16 empfangenen Steuerbefehle zum Steuern des Gargeräts 2,3 verwendet werden und die von dem Mobilgerät 19 empfangenen Steuerbefehle ignoriert bzw. unterdrückt werden.

Im Übrigen entspricht die Funktionsweise der Funktionsweise des vorstehend beschriebenen Verfahrens, des Computerprogramms, des Steuergeräts 6a, 6b bzw. des Gerätesystems 1.

Die drahtlose Datenverbindung 23 zwischen dem jeweiligen Gargeräts 2, 3 gewährleistete eine besonders flexible Steuerung mittels des jeweiligen Mobilgeräts 19, 20 und damit einen hohen Bedienkomfort. Das Steuerverfahren ist zudem besonders sicher. Insbesondere wird zuverlässig verhindert, dass das jeweilige Gargerät 2, 3 von außerhalb des von dem Benutzer sicher kontrollierbaren Bereichs gesteuert wird. Dadurch, dass das Beschränken der Steuerbarkeit des Gargeräts 2, 3 anhand mehrerer Abtastwerte $P_i$ erfolgt, kann das Steuern des jeweiligen Gargeräts 2, 3 besonders robust und zuverlässig erfolgen.

**Patentansprüche**

1. Verfahren zum Steuern eines Gargeräts (2, 3) anhand eines von einem Mobilgerät (19, 20) über eine drahtlose Datenverbindung (23) an ein Steuergerät (6a, 6b) übertragenen Steuerbefehls, umfassend den Schritt:

   1.1. Beschränken der Steuerbarkeit des Gargeräts (2, 3) mittels des Mobilgeräts (19, 20) anhand mehrerer mit einer Signalstärke (P) der drahtlosen Datenverbindung (23) korrelierender Abtastwerte ($P_;$, $P_{I,1}$, $P_{I,2}$, $P_{I,3}$).

2. Verfahren nach Anspruch 1, **gekennzeichnet durch** Bestimmen eines Prüfwerts ($P_T$) anhand der mehreren Abtastwerte ($P_i$, $P_{I,1}$, $P_{I,2}$, $P_{I,3}$).

3. Verfahren nach Anspruch 1 oder 2, **gekennzeichnet durch** Vergleichen des Prüfwerts ($P_T$) mit einem Referenz-Prüfwert ($P_{ref}$) zum Bestimmen eines Vergleichsergebnisses.

4. Verfahren nach einem der vorstehenden Ansprüche, **gekennzeichnet durch** Bestimmen eines Streuwerts ($\sigma$) der mehreren Abtastwerte ($P_i$, $P_{I,1}$, $P_{I,2}$, $P_{I,3}$).

5. Verfahren nach Anspruch 4, **dadurch gekennzeichnet, dass** das Beschränken der Steuerbarkeit des Gargeräts (2, 3) mittels des Mobilgeräts (19, 20) unter der Voraussetzung erfolgt, dass der Streuwert ($\sigma$) geringer ist als ein Referenz-Streuwert ($\sigma_{ref}$).

6. Verfahren nach einem der vorstehenden Ansprüche, **dadurch gekennzeichnet, dass** ein Kalibrier-Prüfwert als Prüfwert ($P_T$) bei einem vorgegebenen Abstand ($D_{b,0}$, $D_{b,1}$, $D_{b,2}$) zwischen dem Steuergerät (6b) und dem Mobilgerät (19, 20) bestimmt wird.

7. Verfahren nach einem der Ansprüche 3 bis 6, **gekennzeichnet durch** Bestimmen des Referenz-Prüfwerts ($P_{ref}$) anhand des Prüfwerts ($P_T$).

8. Verfahren nach Anspruch 7, **dadurch gekennzeichnet, dass** das Bestimmen des Referenz-Prüfwerts ($P_{ref}$) durch das erstmalige Herstellen der drahtlosen Datenverbindung (23) zwischen dem Steuergerät (6a, 6b) und dem Mobilgerät (19, 20) ausgelöst wird.

9. Verfahren nach einem der Ansprüche 3 bis 8, **gekennzeichnet durch** manuelles Festlegen des Referenz-Prüfwerts

($P_{ref}$) entsprechend einer Benutzereingabe.

**10.** Verfahren nach einem der Ansprüche 3 bis 9, **gekennzeichnet durch** automatisiertes Erweitern der Steuerbarkeit des Gargeräts (2, 3) mittels des Mobilgeräts (19, 20) in Abhängigkeit von dem Vergleichsergebnis.

**11.** Verfahren nach Anspruch 10, **dadurch gekennzeichnet, dass** das Erweitern der Steuerbarkeit des Gargeräts (2, 3) mittels des Mobilgeräts (19, 20) in Abhängigkeit von einer Schaltdauer ($\Delta t_s$) erfolgt, über welche die Steuerbarkeit des Gargeräts (2, 3) eingeschränkt war.

**12.** Verfahren nach einem der Ansprüche 3 bis 11, **dadurch gekennzeichnet, dass** das Beschränken der Steuerbarkeit des Gargeräts (2, 3) mittels des Mobilgeräts (19, 20) in Abhängigkeit von dem Vergleichsergebnis erfolgt.

**13.** Computerprogramm, ausgebildet zum Ausführen des Verfahrens nach einem der Ansprüche 1 bis 12.

**14.** Steuergerät (6a, 6b) zum Steuern eines Gargeräts (2, 3), aufweisend

> 14.1. eine Steuer-Prozessoreinheit (24) zum Verarbeiten von Daten, und
> 14.2. mindestens eine mit der Steuer-Prozessoreinheit (24) in Signalverbindung (11) stehende Steuer-Speichereinheit (25) mit einem darauf gespeicherten Computerprogramm nach Anspruch 13.

**15.** Gargerätesystem (1), mit

> 15.1. mindestens einem Gargerät (2, 3) zum Erwärmen von Gargut (32), und
> 15.2. einem mit dem mindestens einen Gargerät (2, 3) in Signalverbindung (11) stehenden Steuergerät (6a, 6b) nach Anspruch 14.

Fig. 1

Fig. 2

EP 4 213 587 A1

Fig. 3

EP 4 213 587 A1

Fig. 4

Fig. 5

Fig. 6

Europäisches
Patentamt

European
Patent Office

Office européen
des brevets

# EUROPÄISCHER RECHERCHENBERICHT

**Nummer der Anmeldung**

EP 23 16 0223

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 236 709 A1 (E G O ELEKTRO-GERÄTEBAU GMBH [DE]) 25. Oktober 2017 (2017-10-25) * Absätze [0007] – [0009], [0014], [0015]; Abbildungen 1,2 * & DE 10 2016 206912 A1 (E G O ELEKTRO-GERÄTEBAU GMBH [DE]) 26. Oktober 2017 (2017-10-26) ----- | 1-15 | INV. H05B1/02 H05B6/06 F24C7/08 H04W4/38 |
| A | DE 10 2014 215778 A1 (BSH HAUSGERÄTE GMBH [DE]) 11. Februar 2016 (2016-02-11) * Absatz [0010]; Abbildungen 1-3 * ----- | 1-15 | |
| A | US 2002/094778 A1 (CANNON JOSEPH M [US] ET AL) 18. Juli 2002 (2002-07-18) * Absätze [0027] – [0028]; Abbildung 1 * ----- | 1-15 | |

**RECHERCHIERTE SACHGEBIETE (IPC)**

H05B
F24C
H04W

Der vorliegende Recherchenbericht wurde für alle Patentansprüche erstellt

| Recherchenort | Abschlußdatum der Recherche | Prüfer |
|---|---|---|
| München | 11. Mai 2023 | Pierron, Christophe |

**ANHANG ZUM EUROPÄISCHEN RECHERCHENBERICHT
ÜBER DIE EUROPÄISCHE PATENTANMELDUNG NR.**

EP 23 16 0223

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2023

| Im Recherchenbericht angeführtes Patentdokument | Datum der Veröffentlichung | Mitglied(er) der Patentfamilie | Datum der Veröffentlichung |
|---|---|---|---|
| EP 3236709 A1 | 25-10-2017 | CN 107305358 A | 31-10-2017 |
| | | DE 102016206912 A1 | 26-10-2017 |
| | | EP 3236709 A1 | 25-10-2017 |
| | | ES 2818724 T3 | 13-04-2021 |
| | | JP 6830851 B2 | 17-02-2021 |
| | | JP 2017201780 A | 09-11-2017 |
| | | KR 20170121078 A | 01-11-2017 |
| | | PL 3236709 T3 | 28-12-2020 |
| | | US 2017310810 A1 | 26-10-2017 |
| DE 102014215778 A1 | 11-02-2016 | DE 102014215778 A1 | 11-02-2016 |
| | | EP 2983149 A1 | 10-02-2016 |
| US 2002094778 A1 | 18-07-2002 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020213804
- EP 3236709 A1